# EUROPEAN PATENT APPLICATION

(11) **EP 4 697 871 A1**
(43) Date of publication of application: **18.02.2026**
(21) Application number: 25716962.3
(22) Date of filing: 26.03.2025
(51) Int. Cl.: H05K 5/06, H05K 1/14, H04M 1/02, H01Q 1/24, G06F 1/16

(54) **ELECTRONIC DEVICE INCLUDING SEALER**

(30) Priority: 24.06.2024 KR 20240082172; 09.07.2024 KR 20240090327; 29.08.2024 KR 20240117198
(71) Applicant: SAMSUNG ELECTRONICS CO., LTD., Yeongtong-gu Suwon-si, Gyeonggi-do 16677 (KR)
(72) Inventor: KIM, Joohan, Suwon-si, Gyeonggi-do 16677 (KR); PARK, Jinwoo, Suwon-si, Gyeonggi-do 16677 (KR); PARK, Eunsoo, Suwon-si, Gyeonggi-do 16677 (KR); CHO, Yonglak, Suwon-si, Gyeonggi-do 16677 (KR)
(74) Representative: HGF
(86) International application number: PCT/KR2025/003860
(87) International publication number: WO 2026/005199

(57) **Abstract**

The disclosure relates to an electronic device. A foldable electronic device according to an embodiment of the disclosure may include a foldable housing including a first housing and a second housing, a hinge rotatably coupling the first housing and the second housing, a flexible circuit board extending across the hinge in a first direction to be connected to first circuitry in the first housing and second circuitry in the second housing, and including a first portion having at least one signal line and a second portion having at least one signal line, and a sealer engaged between the flexible circuit board and a support in the first housing and configured to block penetration of moisture into an interior of the first housing. The first and second portions of the flexible circuit board may be disposed side by side in a second direction perpendicular to the first direction, wherein the second portion has a second thickness smaller than a first thickness of the first portion or is configured to be compressible to a second thickness smaller than the first thickness. The sealer may have a first sealing portion that presses the first portion of the flexible circuit board and a second sealing portion that presses the second portion of the flexible circuit board. The second sealing portion may have a thickness greater than that of the first sealing portion.

## Description

### [Technical Field]

Various embodiments disclosed herein relate to an electronic device, for example, an electronic device including a sealer.

### [Background Art]

With the remarkable development of information communication technology, semiconductor technology, and the like, the distribution and use of various electronic devices are rapidly increasing. Recent electronic devices are being developed to be portable and capable of communication.

The term "electronic device" may refer to a device that performs a specific function according to an installed program, such as a home appliance, an electronic scheduler, a portable multimedia player, a mobile communication terminal, a tablet PC, an image and sound device, a desktop or laptop PC, or a vehicle navigation system. For example, these electronic devices may output stored information as sound or images.

As the degree of integration of electronic devices increases and ultra-high-speed and high-capacity wireless communication become more widespread, a single electronic device, such as a mobile communication terminal, may be now equipped with various functions. For example, not only communication functions but also entertainment functions such as gaming, multimedia functions such as music and video playback, communication and security functions such as mobile banking, as well as schedule management and electronic wallet functions, are being integrated into a single electronic device. These electronic devices are being miniaturized to be conveniently carried by users.

The above-described information may be provided as related art for the purpose of assisting in understanding the disclosure. None of the above contents make an assertion or decision as to whether any of the above might be applicable as prior art with regard to the disclosure.

### [Detailed Description of the Invention]

### [Technical Solution]

According to an embodiment of the disclosure, a foldable electronic device may include a foldable housing including a first housing and a second housing, a hinge rotatably coupling the first housing and the second housing, a flexible circuit board extending across the hinge in a first direction to be connected to first circuitry in the first housing and second circuitry in the second housing, and including a first portion having at least one signal line and a second portion having at least one signal line, and a sealer engaged between the flexible circuit board and a portion of a support member inside the first housing and configured to prevent moisture from penetrating into the first housing. The first and second portions of the flexible circuit board may be disposed side by side in a second direction perpendicular to the first direction, wherein the second portion has a second thickness smaller than a first thickness of the first portion or is configured to be compressible to a second thickness smaller than the first thickness. The sealer may include a first sealing portion pressing the first portion of the flexible circuit board and a second sealing portion pressing the second portion of the flexible circuit board, and the second sealing portion may have a thickness greater than that of the first sealing portion.

According to an embodiment of the disclosure, an electronic device may include a housing, a flexible circuit board configured to be deformable, and a sealer disposed between the flexible circuit board and the housing. The flexible circuit board may include a first portion having a first thickness and configured to transmit a first signal, and a second portion having a second thickness smaller than the first thickness and configured to transmit a second signal. The sealer may include a first sealing portion disposed at a position corresponding to the first portion and having a third thickness, and a second sealing portion disposed at a position corresponding to the second portion and having a fourth thickness larger than the third thickness.

According to an embodiment of the disclosure, an electronic device may include a housing including a support portion, a sealer spaced apart from the support portion, and a flexible circuit board disposed between the support portion and the sealer. The flexible circuit board may include a first portion having a first thickness and configured to process data, and a second portion having a second thickness smaller than the first thickness and configured to transmit a signal, and the support portion may include a first support portion disposed to correspond to the first portion and having a third thickness, and a second support portion disposed to correspond to the second portion and having a fourth thickness larger than the third thickness.

According to an embodiment of the disclosure, an electronic device may include a housing, a flexible circuit board configured to be deformable, and a sealer disposed between the flexible circuit board and the housing. The flexible circuit board may include a first portion having a first thickness and configured to process data, and a second portion having a second thickness smaller than the first thickness and configured to transmit a signal. The sealer may include a first sealing portion disposed to correspond to the first portion and having a first modulus, and a second sealing portion disposed to correspond to the second portion and having a second modulus larger than the first modulus.

According to an embodiment of the disclosure, an electronic device may include a housing; a deformable flexible circuit board; a support member disposed inside the housing; and a sealer disposed between the flexible circuit board and a portion of the support member, wherein the flexible circuit board comprises: a first portion having a first thickness and configured to transmit a first signal; and a second portion configured to transmit a second signal, wherein the second portion has a second thickness smaller than the first thickness or is compressible to a second thickness smaller than the first thickness, and wherein the sealer comprises: a first sealing portion disposed at a position corresponding to the first portion and having a third thickness; and a second sealing portion disposed at a position corresponding to the second portion and having a fourth thickness greater than the third thickness.

According to an embodiment of the disclosure, an electronic device may include a housing; a deformable flexible circuit board; a support member disposed inside the housing; and a sealer disposed between the flexible circuit board and a portion of the support member, wherein the flexible circuit board comprises: a first portion having a first thickness and configured to transmit a first signal; and a second portion configured to transmit a second signal, wherein the second portion has a second thickness smaller than the first thickness, wherein the sealer comprises: a first sealing portion disposed to correspond to the first portion and having a first elastic modulus; and a second sealing portion disposed to correspond to the second portion and having a second elastic modulus greater than the first elastic modulus.

According to an embodiment of the disclosure, an electronic device may include a housing; a deformable flexible circuit board; a support member disposed inside the housing, the support member comprising a first support portion and a second support portion; and a sealer disposed between the flexible circuit board and the first portion of the support member, wherein the flexible circuit board comprises: a first portion having a first thickness and configured to transmit a first signal; and a second portion configured to transmit a second signal, wherein the second portion has a second thickness smaller than the first thickness, and wherein the second support portion comprises: a first area disposed at a position corresponding to the first portion and having a third thickness; and a second area disposed at a position corresponding to the second portion and having a fourth thickness greater than the third thickness.

According to an embodiment of the disclosure, an electronic device may include a housing; a deformable flexible circuit board; a support member disposed inside the housing; and a sealer disposed between the flexible circuit board and a first portion of the support member, wherein the flexible circuit board comprises: a first portion having a first thickness and configured to transmit a first signal; and a second portion configured to transmit a second signal, wherein the second portion has a second thickness smaller than the first thickness, and wherein at least one of the sealer or a second portion of the support member comprises: a first surface configured to contact or align with the first portion of the flexible circuit board; and a second surface configured to contact or align with the second portion of the flexible circuit board, wherein the second surface is dislocated from the first surface.

### [Brief Description of Drawings]

The above and other aspects, features, and/or advantages of an embodiment of the disclosure will be more apparent from the following detailed description taken with reference to the accompanying drawings.
FIG. 1 is a block diagram illustrating an electronic device in a network environment according to various embodiments.
FIG. 2 illustrates a front view, a side view, and a rear view of an electronic device according to an embodiment of the disclosure in an unfolded state.
FIG. 3 illustrates a front view, a side view, and a rear view of the electronic device according to an embodiment of the disclosure in a folded state.
FIG. 4 is an exploded perspective view of an electronic device according to an embodiment of the disclosure in the unfolded state.
FIG. 5 is a partial cross-sectional view of the electronic device according to an embodiment of the disclosure.
FIG. 6 is a view illustrating a portion of the electronic device according to an embodiment of the disclosure.
FIG. 7 is a view illustrating a portion of a flexible circuit board according to an embodiment of the disclosure.
FIG. 8 is a partial cross-sectional view of the electronic device according to an embodiment of the disclosure.
FIG. 9 is an exploded view of the structure of FIG. 8.
FIG. 10 is a conceptual partial cross-sectional view of the electronic device according to an embodiment of the disclosure.
FIG. 11A is a conceptual cross-sectional view of a flexible circuit board according to an embodiment of the disclosure.
FIG. 11B is a conceptual cross-sectional view of the flexible circuit board according to an embodiment of the disclosure.
FIG. 11C is a conceptual cross-sectional view of the flexible circuit board according to an embodiment of the disclosure.
FIG. 12 is an exploded view of a portion of the structure of FIG. 5.
FIG. 13 is a partial cross-sectional view of the electronic device according to an embodiment of the disclosure.
FIG. 14 is an exploded view of a portion of an electronic device according to an embodiment of the disclosure.
FIG. 15 is an exploded view of a portion of an electronic device according to an embodiment of the disclosure.

### [Mode for Carrying out the Invention]

The following description made with reference to the accompanying drawings may provide an understanding of various exemplary implementations of the disclosure including the claims and equivalents thereof. An exemplary embodiment set forth in the following description includes various particular details to help the understanding, but is considered one of various embodiments. Therefore, an ordinary person in the art will appreciate that various changes and modifications may be made to various implementations set forth herein without departing from the technical idea and scope of the disclosure. In addition, descriptions of well-known functions and configurations may be omitted for clarity and brevity.

The terms and words used in the following description and claims are not limited to bibliographical meanings, but may be used to clearly and consistently describe the various embodiments set forth herein. Therefore, it will be apparent to those skilled in the art that the following description of various implementations of the disclosure is provided only for the purpose of explanation, rather than for the purpose of limiting the disclosure defined as the scope of protection and equivalents thereto.

It should be appreciated that a singular form such as "a," "an," or "the" also includes the meaning as a plural form, unless the context clearly indicates otherwise. Therefore, for example, "a component surface" may mean one or more of component surfaces.

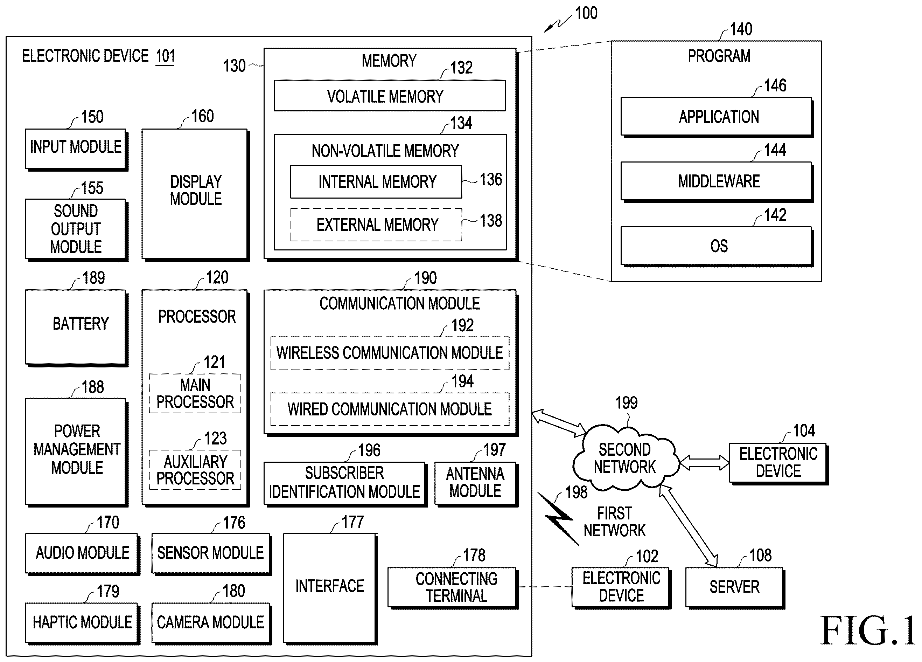

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

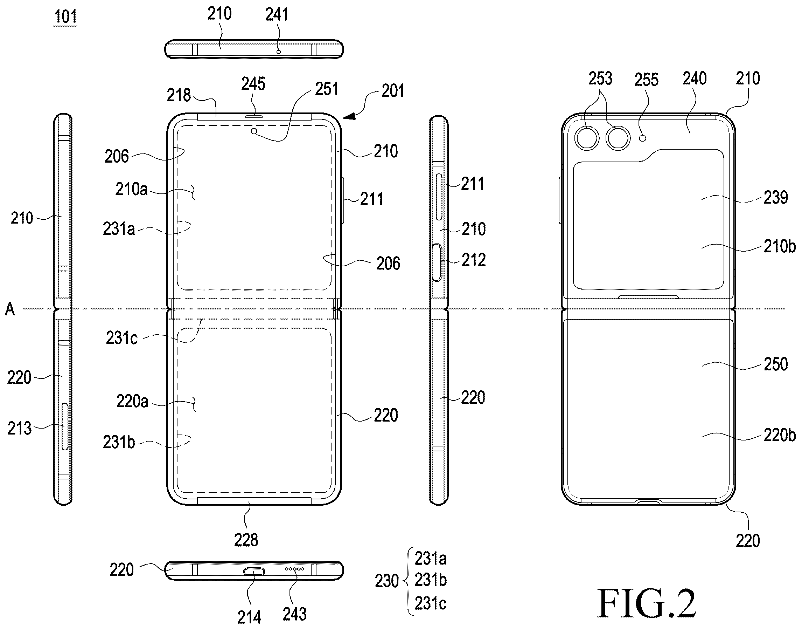

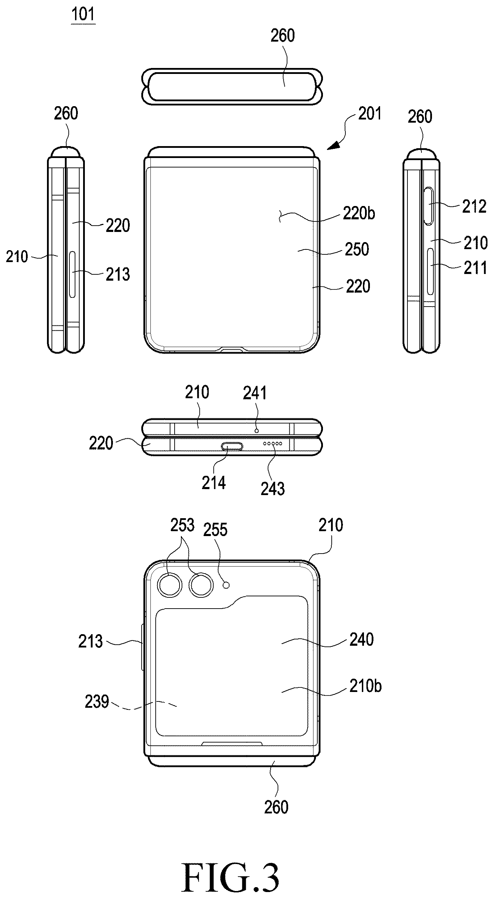

FIG. 2 illustrates a front view, a side view, and a rear view of an electronic device 101 according to an embodiment of the disclosure in an unfolded state. FIG. 3 illustrates a front view, a side view, and a rear view of the electronic device 101 according to an embodiment of the disclosure in a folded state.

Referring to FIGS. 2 and 3, the electronic device 101 according to an embodiment may include a first housing 210, a second housing 220, a flexible or foldable display 230 (hereinafter, simply referred to as a "first display 230") disposed on the first housing 210 and the second housing 220 (e.g., the display module 160 in FIG. 1), and a hinge cover 260. The electronic device 101 may include a housing 201. The housing 201 may include the first housing 210 and the second housing 220.

According to an embodiment, the surface on which the first display 230 is disposed may be defined as the front surface of the electronic device 101. At least a portion of the front surface of the electronic device 101 may be formed of a substantially transparent front surface plate (e.g., a glass plate or a polymer plate including various coating layers). In addition, the surface opposite to the front surface may be defined as the rear surface of the electronic device 101. The rear surface of the electronic device 101 may be formed of a substantially opaque rear surface plate (hereinafter, referred to as a "rear surface cover"). The rear surface cover may be made of, for example, coated or colored glass, ceramics, polymer, metal (e.g., aluminum, stainless steel (STS), or magnesium), or a combination of at least two of these materials. Furthermore, the surface surrounding the space between the front surface and the rear surface may be defined as the side surface of the electronic device 101. The side surface may be defined by a side surface bezel structure (or a "side surface member") coupled to the front surface plate and the rear surface plate and including metal and/or polymer. In some embodiments, the rear surface cover and the side surface bezel structure may be integrally configured and may include the same material (e.g., a metal material such as aluminum).

The electronic device 101 may include at least one of a first display 230, audio modules 241, 243, and 245, a sensor module 255, a camera module 253, key input devices 211, 212, and 213, and a connector hole 214. According to an embodiment, in the electronic device 101, at least one of the components (e.g., the key input devices 211, 212, and 213) may be omitted, or other components (e.g., a light-emitting element) may be additionally included.

According to an embodiment of the disclosure, the first display 230 may include a display, at least a portion of which is transformable into a flat shape or a curved shape. According to an embodiment, the first display 230 may include a folding area 231c, a first area 231a disposed on one side of the folding area 231c (e.g., the top side of the folding area 231c illustrated in FIG. 2), and a second area 231b disposed on the other side of the folding area 231c (e.g., the bottom side of the folding area 231c illustrated in FIG. 2). However, the area division of the first display 230 illustrated in FIG. 2 is exemplary, and the first display 230 may be divided into multiple (e.g., four or more or two) areas depending on its structure or function. For example, in the embodiment illustrated in FIG. 2, the areas of the first display 230 may be divided with reference to the folding area 203 or a folding axis A. However, in another embodiment, the areas of the first display 230 may be divided with reference to another folding area 231c or another folding axis (e.g., a folding axis perpendicular to the folding axis A). The first area 231a may be disposed on the first housing 210. The second area 231b may be disposed on the second housing 220.

According to an embodiment of the disclosure, the microphone hole 241 may include a microphone disposed therein so as to acquire external sound, and in some embodiments, multiple microphones may be disposed to be able to detect the direction of sound.

According to an embodiment of the disclosure, speaker holes 243 and 245 may include an external speaker hole 243 and a communication receiver hole 245. In some embodiments, the speaker holes 243 and 245 and the microphone hole 241 may be implemented as a single hole, or a speaker (e.g., a piezo speaker) may be included without the speaker holes 243 and 245. The positions and number of microphone holes 241 and speaker holes 243 and 245 may vary depending on embodiments.

According to an embodiment of the disclosure, the camera module 253 may include a first camera device 251 disposed on the first surface 210a of the first housing 210 of the electronic device 101 and a second camera device 253 disposed on the second surface 210b. In addition, the electronic device 101 may further include a flash (not illustrated). The camera devices 251 and 253 may include one or more lenses, an image sensor, and/or an image signal processor. The flash (not illustrated) may include, for example, a light-emitting diode or a xenon lamp.

According to an embodiment of the disclosure, the sensor module 255 may generate electrical signals or data values corresponding to an internal operating state or an external environmental state of the electronic device 101. Although not illustrated in the drawings, the electronic device 101 may additionally or alternatively include another sensor module (e.g., the sensor module 176 in FIG. 1) in addition to or instead of the sensor module 255 provided on the second surface 210b of the first housing 210. The electronic device 101 may include, as a sensor module, at least one of, for example, a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment of the disclosure, the key input devices 211, 212, and 213 may be disposed on a side of surface a foldable housing (e.g., the hinge cover 260, the first housing 210, and/or the second housing 220). In another embodiment, the electronic device 101 may not include some or all of the above-mentioned key input devices 211, 212, and 213, and the key input devices, which are not included in the electronic device 101, may be implemented in another form, such as soft keys, on the first display 230. In some embodiments, the key input devices may be configured such that key inputs are implemented by sensor modules (e.g., a gesture sensor).

According to an embodiment of the disclosure, the connector hole 214 may be configured to accommodate a connector (e.g., a USB connector) configured to transmit and receive power and/or data to and from an external electronic device, and to accommodate, in addition to or instead of the connector, a connector configured to transmit and receive an audio signal to and from an external electronic device.

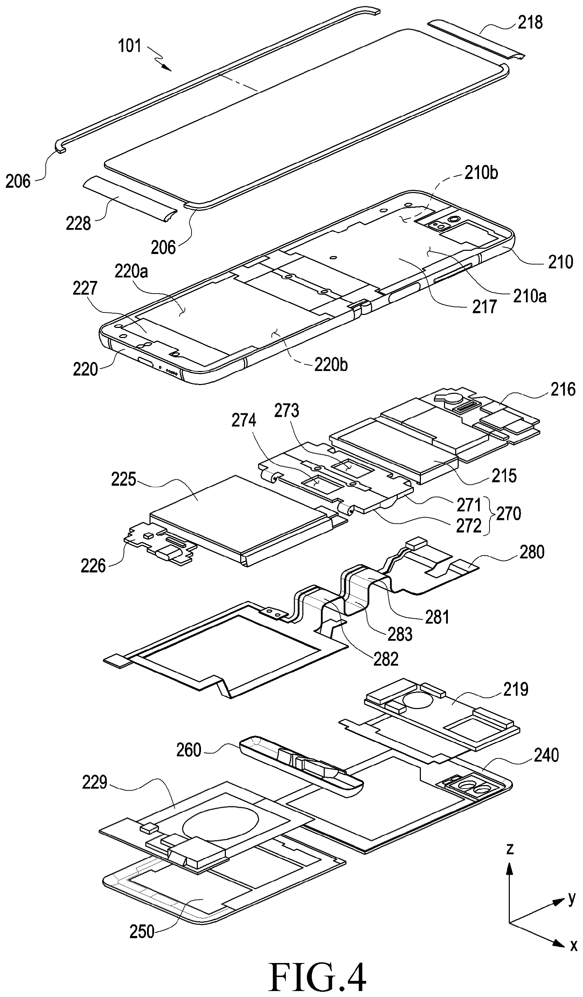

According to an embodiment of the disclosure, a foldable housing may be implemented by coupling the first housing 210, the second housing 220, the first rear surface cover 240, the second rear surface cover 250, and/or the hinge module (e.g., the hinge structure 270 in FIG. 4 described below). The foldable housing of the electronic device 101 is not limited to the shape and assembly illustrated in FIG. 2, but may be implemented by combining and/or assembling other shapes or components. For example, in another embodiment, the first housing 210 and the first rear surface cover 240 may be integrated, and the second housing 220 and the second rear surface cover 250 may be integrated. According to an embodiment disclosed herein, the term "housing" may refer to a configuration where various other components not mentioned herein are combined and/or assembled. For example, the first area 231a of the first display 230 may be described as forming one surface of the first housing 210, and in another embodiment, the first area 231a of the first display 230 may be described as being disposed on or attached to one surface of the first housing 210.

According to an embodiment of the disclosure, the first housing 210 may be connected to a hinge structure (e.g., the hinge structure 270 in FIG. 4 described later), and may include a first surface 210a oriented in a first direction, and a second surface 210b oriented in a second direction opposite to the first direction. The second housing 220 may be connected to the hinge structure (e.g., the hinge structure 270 in FIG. 4 described later), and may include a third surface 220a oriented in a third direction and a fourth surface 220b oriented in a fourth direction opposite to the third direction. The second housing 320 is rotatable and pivotable about the hinge structure (or the folding axis A) relative to the first housing 210.

According to an embodiment of the disclosure, the first housing 210 and the second housing 220 may be disposed on both sides (or upper and lower sides) with respect to the folding axis A. The first housing 210 and the second housing 220 may vary in the angle or distance at which they intersect depending on whether the electronic device 101 is in the unfolded state, in the folded state, or in the intermediate state in which the electronic device 101 is partially unfolded (or partially folded).

According to an embodiment of the disclosure, the first housing 210 and the second housing 220 may be at least partially made of a metal or non-metal material having rigidity in a level selected to support the first display 230. At least a portion made of the metal material may be provided as a ground plane or a radiating conductor of the electronic device 101, and when provided as the ground plane, may be electrically connected to a ground line formed on a printed circuit board (e.g., the printed circuit board 216 or 226 in FIG. 4).

According to an embodiment of the disclosure, the first rear surface cover 240 is arranged on one side (e.g., the upper side in FIG. 2) of the folding axis A on the rear surface of the electronic device 101, and may have, for example, a substantially rectangular periphery, which may be surrounded by the first housing 210 (and/or a side surface bezel structure). Similarly, the second rear surface cover 250 may be disposed on the other side (e.g., the lower side in FIG. 2) of the folding axis A on the rear surface of the electronic device 101 and may have a periphery surrounded by the second housing 220 (and/or a side surface bezel structure).

According to an embodiment of the disclosure, the first rear surface cover 240 and the second rear surface cover 250 may have substantially symmetrical shapes about the folding axis A. However, the first rear surface cover 240 and the second rear surface cover 250 do not necessarily have mutually symmetrical shapes, and in another embodiment, the electronic device 101 may include a first rear surface cover 240 and a second rear surface cover 250 having various shapes. In another embodiment, the first rear surface cover 240 may be integrated with the first housing 210, and the second rear surface cover 250 may be integrated with the second housing 220.

According to an embodiment of the disclosure, the first rear surface cover 240, the second rear surface cover 250, the first housing 210, and the second housing 220 may define a space in which various components (e.g., the printed circuit boards 216 and 226 or the batteries 215 and 225 in FIG. 4) of the electronic device 101 may be disposed. According to an embodiment, one or more components may be disposed or visually exposed on the rear surface of the electronic device 101. For example, at least a portion of a second display 239 may be visually exposed through the first rear surface cover 240. In another embodiment, one or more components or sensors may be visually exposed through the first rear surface cover 240. In various embodiments, the components or sensors may include a proximity sensor, a rear camera, and/or a flash. Although not separately illustrated in the drawings, one or more components or sensors may be visually exposed through the second rear surface cover 250.

According to an embodiment of the disclosure, a front camera 251 exposed to the front surface of the electronic device 101 through one or more openings or a rear camera 253 exposed through the first rear surface cover 240 may include one or more lenses, an image sensor, and/or an image signal processor. The flash (not illustrated) may include, for example, a light-emitting diode or a xenon lamp. In some embodiments, two or more lenses (e.g., an infrared camera, a wide-angle lens, and a telephoto lens), and image sensors may be arranged on one surface of the electronic device 101.

According to an embodiment of the disclosure, a foldable housing 210, 220, 260 may include a hinge cover 260, a first housing 210, and a second housing 220. The first housing 210 and the second housing 220 may be rotated relative to the hinge structure 270. When the electronic device 101 is switched from the unfolded state to the folded state, the first housing 210 and the second housing 220 may be rotated about the hinge structure 270 to come closer to each other. When the electronic device 101 is switched from the folded state to the unfolded state, a portion of the first housing 210 and a portion of the second housing 220 may be rotated about the hinge cover 260 to move away from each other. According to an embodiment of the disclosure, the folding direction of the first housing 210 and/or the second housing 220 may include the direction in which the first housing 210 and/or the second housing 220 rotates about the hinge structure 270 when the first housing 210 and/or the second housing 220 is switched from the unfolded state to the folded state. The unfolding direction of the first housing 210 and/or the second housing 220 may include the direction in which the first housing 210 and/or the second housing 220 rotates about the hinge structure 270 when the first housing 210 and/or the second housing 220 is switched from the folded state to the unfolded state.

According to an embodiment of the disclosure, the electronic device 101 may be switched between the state in which the first display 230 is folded and the state in which the first display 230 is unfolded. For example, the first housing 210 and the second housing 220 may rotate around the folding axis A between the folded state in which the first area 231a and the second area 231b of the first display 230 face each other, and the unfolded state in which the electronic device 101 is unfolded by a predetermined angle from the folded state (e.g., the unfolded state of the electronic device 101 illustrated in FIG. 2).

According to an embodiment of the disclosure, as the first housing 210 and the second housing 220 rotate around the folding axis A, the electronic device 101 may include a folded state and an unfolded state. The folded state may be the state in which the first housing 210 and the second housing 220 face each other, and may be the state in which the angle formed by the first housing 210 and the second housing 220 is less than a predetermined angle (e.g., 10 degrees). The unfolded state may be the state in which the electronic device 101 is fully unfolded or partially unfolded, and may be the state in which the angle formed by the first housing 210 and the second housing 220 is greater than or equal to the predetermined angle.

FIG. 2 illustrates the unfolded state of the electronic device 101 in which the first housing 210 and the second housing 220 form an angle of about 180°. FIG. 3 illustrates the folded state of the electronic device 101 in which the first housing 210 and the second housing 220 face each other and are parallel. In the folded state, the first area 231a and the second area 231b of the first display 230 may be positioned to face each other, and the folding area 231c may be bent.

According to an embodiment of the disclosure, folding of the electronic device 101 may be implemented in two ways: "in-folding" in which the first area 231a and the second area 231b are folded to face each other, and "out-folding" in which the first area 231a and the second area 231b are folded to face opposite directions. For example, in the folded state in the in-folding manner, the first area 231a and the second area 231b may be substantially concealed, and in the fully unfolded state, the first area 231a and the second area 231b may be disposed to face substantially the same direction. For example, in the folded state in the out-folding manner, the first area 231a and the second area 231b may be disposed to face opposite directions and exposed to the outside, and in the fully unfolded state, the first area 231a and the second area 231b may be disposed to face substantially the same direction.

According to an embodiment of the disclosure, the first display 230 may include a display panel (not illustrated) and a window member (not illustrated), and at least a portion thereof may be formed to be flexible. Although not illustrated separately, it will be readily understood by those skilled in the art that the first display 230 or the display panel includes various layers, such as a light-emitting layer, a substrate encapsulating the light-emitting layer, an electrode or wiring layer, and/or an adhesive layer bonding adjacent different layers. When the first display 230 (e.g., the folding area 231c) is transformed into a flat shape and a curved shape, a relative displacement may occur between the layers forming the first display 230. The relative displacement caused by the deformation of the first display 203 may increase as the distance from the folding axis A becomes greater and/or as the thickness of the first display 230 becomes larger.

According to an embodiment of the disclosure, a window member, for example, a thin film plate, may serve as a protective film for protecting the display panel. As the protective film, a thin plate may be made of a material that protects the display panel from external impact, is resistant to scratches, and causes fewer wrinkles in the folding area 231c even during repeated folding and unfolding operations of the housings 210 and 220. For example, the thin plate may be made of a material such as a clear polyimide film (CPI) or ultra-thin glass (UTG).

According to an embodiment of the disclosure, the electronic device 101 may further include one or more protective members 206 or one or more decorative covers 218 and 228 disposed at least partially along the periphery of the first display 230 on the front side (e.g., the first surface 210a or the third surface 220a). For instance, the protective members 206 and the decorative covers 218 and 228 may be connected to each other to wrap the periphery of the first display 230. The protective members 206 or the decorative covers 218 and 228 may prevent at least a portion of the periphery of the first display 230 from coming into contact with a mechanical structure (e.g., the first housing 210 or the second housing 220). The protective members 206 or the decorative covers 218 and 228 may also be visually exposed to the exterior of the electronic device 101.

According to an embodiment of the disclosure, the decorative covers 218 and 228 and the protective members 206 may be interconnected. As an example, the decorative covers 218 and 228 and the protective members 206 may be integrated. The decorative covers 218 and 228 may extend along the folding axis A. The decorative covers 218 and 228 may include a first decorative cover 218 positioned between a portion of the periphery of the first area 231a of the first display 230 and an inner wall of the first housing 210. The decorative covers 218 and 228 may include a second decorative cover 218 positioned between a portion of the periphery of the second area 231b of the first display 230 and an inner wall of the second housing 220. As an example, the first decorative cover 218 and the second decorative cover 228 may extend substantially side by side along the folding axis A.

According to an embodiment of the disclosure, the speaker hole 245 may be formed in the decorative cover 218 or protective member 206 interposed between the periphery of the first area 231a of the first display 230 and the inner wall of the first housing 210. As an example, the speaker hole 245 may be formed in the first decorative cover 218.

FIG. 4 is an exploded perspective view of an electronic device 101 according to an embodiment of the disclosure.

The descriptions of the first housing 210 and the second housing 220 described with reference to FIGS. 2 and 3 may be equally applied to the first housing 210 and the second housing 220 of FIG. 4, which share the same names.

According to an embodiment, the first display 230 may be visually exposed through a significant portion of the front surface of the electronic device 101. In some embodiments, the shape of the first display 230 may be substantially the same as the shape of the periphery of the front surface of the electronic device 101.

In FIG. 4, "Y" may refer to the length direction of the electronic device 101 in a second state. In addition, in an embodiment of the disclosure, "+Y" may refer to the upward direction of the electronic device 101 with reference to the folding axis A of the electronic device 101, and "-Y" may refer to the downward direction of the electronic device 101 with reference to the folding axis A of the electronic device 101.

According to an embodiment of the disclosure, the foldable housing of the electronic device 101 may include a first housing 210 and a second housing 220. According to an embodiment, the first housing 210 may include a first surface 210a and a second surface 210b facing the opposite direction of the first surface 210a, and the second housing 220 may include a third surface 220a and a fourth surface 220b facing the opposite direction of the third surface 220a. The electronic device 101 or the foldable housings 210, 220, 260 may additionally or alternatively include bracket assemblies 217 and 227. The bracket assemblies 217 and 227 may include a first bracket assembly 217 disposed in the first housing 210 and a second bracket assembly 227 disposed in the second housing 220. At least a portion of the bracket assemblies 217 and 227, such as at least portion of the first bracket assembly 217 and at least a portion of the second bracket assembly 227, may function as plates for supporting the hinge structure 270.

According to an embodiment of the disclosure, various electronic components may be disposed on the printed circuit boards 216 and 226. For example, a processor (e.g., the processor 120 in FIG. 1), memory (e.g., the memory 130 in FIG. 1), and/or an interface (e.g., the interface 177 in FIG. 1) may be mounted on the printed circuit board 216 or 226. The processor may include, for example, one or more of a central processing unit, an application processor, a graphics processing unit, an image signal processor, a sensor hub processor, or a communication processor. The memory may include, for example, volatile memory or non-volatile memory. The interface may include, for example, a high-definition multimedia interface (HDMI), a universal serial bus (USB) interface, an SD card interface, and/or an audio interface. The interface may electrically or physically connect, for example, the electronic device 101 to an external electronic device, and may include a USB connector, an SD card/MMC connector, or an audio connector.

According to an embodiment of the disclosure, the printed circuit boards 216 and 226 may include a first printed circuit board 216 disposed on the first bracket assembly 217 side and a second printed circuit board 226 disposed on the second bracket assembly 227 side. The first printed circuit board 216 and the second printed circuit board 226 may be disposed within the space formed by the foldable housing 210, 220, 260, the bracket assemblies 217 and 227, the first rear surface cover 240, and/or the second rear surface cover 250. The first printed circuit board 216 and the second printed circuit board 226 may each be separately equipped with components configured to implement various functions of the electronic device 101. For example, a processor may be disposed on the first printed circuit board 216, while the audio interface may be disposed on the second printed circuit board 226.

According to an embodiment of the disclosure, batteries 215 and 225 configured to supply power to the electronic device 101 may be disposed adjacent to the printed circuit boards 216 and 226. At least a portion of the batteries 215 and 225 may be disposed on substantially the same plane as, for example, the printed circuit boards 216 and 226. According to an embodiment, the first battery 215 may be disposed adjacent to the first printed circuit board 216, and the second battery 225 may be disposed adjacent to the second printed circuit board 226. The batteries 215 and 225 are devices configured to supply power to at least one component of the electronic device 101, and may include, for example, a non-rechargeable primary battery, a rechargeable secondary battery, or a fuel cell. The batteries 215 and 225 may be integrally disposed within the foldable housings 210, 220, 260 or detachably disposed on the foldable housings 210, 220, 260.

According to an embodiment of the disclosure, the hinge structure 270 may provide a folding axis (e.g., the folding axis A in FIG. 2) and may be configured to rotatably connect or couple the foldable housing 210, 220, 260 and/or the bracket assemblies 217 and 227. The hinge structure 270 may include a first hinge structure 271 disposed on the first printed circuit board 216 side and a second hinge structure 272 disposed on the second printed circuit board 226 side. The hinge structure 270 may be disposed between the first printed circuit board 216 and the second printed circuit board 226. According to an embodiment, the hinge structure 270 may be substantially integrated with at least a portion of the first bracket assembly 217 and at least a portion of the second bracket assembly 227.

According to an embodiment of the disclosure, the term "housing structure" may refer a structure which includes the foldable housing 210, 220, 260 and in which at least one component disposed inside the foldable housing 210, 220, 260 is assembled and/or coupled. The housing structure may include a first housing structure and a second housing structure. For example, an assembled configuration including at least one of the first housing 210, and the first bracket assembly 217, the first printed circuit board 216, and the first battery 215 disposed inside the first housing 210 may be referred to as a "first housing structure". In addition, an assembled configuration including at least one of the second housing 220 and the second bracket assembly 227, the second printed circuit board 226, and the second battery 225 disposed inside the second housing 220 may be referred to as a "second housing structure". However, it should be noted that the "first housing structure" and the "second housing structure" are not limited to the addition of the above-described components, and various other components may be additionally included or omitted.

According to an embodiment of the disclosure, the flexible connection member 280 may be, for example, a flexible printed circuit board (FPCB). The flexible connection member 280 may connect various electrical components disposed on the first printed circuit board 216 and the second printed circuit board 226. To this end, the flexible connection member 280 may be arranged across the "first housing structure" and the "second housing structure". According to an embodiment, the flexible connection member 280 may be positioned across at least a portion of the hinge structure 270. According to an embodiment, the flexible connection member 280 may be configured to connect the first printed circuit board 216 and the second printed circuit board 226 across the hinge structure 270, for example, along a direction parallel to the y-axis of FIG. 4. In another example, the flexible connection member 280 may be extended or disposed through openings 273 and 274 formed in the hinge structure 270. In this case, a portion 281 of the flexible connection member 280 may be disposed to extend across one side (e.g., the upper portion) of the first hinge structure 271, and another portion 282 of the flexible connection member 280 may be disposed to extend across one side (e.g., the upper portion) of the second hinge structure 272. In addition, still another portion 283 of the flexible connection member 280 may be disposed on the other sides (e.g., the lower portions) of the first hinge structure 271 and the second hinge structure 272. At positions adjacent to the first hinge structure 271 and the second hinge structure 272, a space (hereinafter, referred to as a "wiring space") surrounded by at least a portion of the first hinge structure 271, at least a portion of the second hinge structure 272, and at least a portion of the hinge cover 260 may be provided. According to an embodiment, at least a portion 283 of the flexible connection member 280 may be disposed in the wiring space.

According to an embodiment of the disclosure, the hinge cover 260 may be configured to accommodate or enclose at least a portion of the hinge structure 270 or the wiring space. In some embodiments, the hinge cover 260 may define the wiring space together with the hinge structure 270 and may protect a component (e.g., at least a portion 283 of the flexible connection member 280) disposed within the wiring space from external impact. According to an embodiment, the hinge cover 260 may be disposed between the first housing 210 and the second housing 220. In an in-folding type electronic device 101, the hinge cover 260 may be at least partially concealed by the foldable housing 210, 220, 260. For example, in the folded state, the hinge cover 260 may be visually exposed to the external space between the rear surface of the first housing 210 (e.g., the first rear surface cover 240) and the rear surface of the second housing 220 (e.g., the second rear surface cover 250), and in the unfolded state, may be substantially accommodated inside the first housing 210 or the second housing 220 to be visually concealed.

According to an embodiment of the disclosure, the antenna modules 219 and 229 (e.g., the antenna module 197 in FIG. 1) may be disposed between the rear surface covers 240 and 250 and the batteries 215 and 225. According to an embodiment, the antenna modules 219 and 229 may include a first antenna module 219 disposed on the first housing 210 side and a second antenna module 229 disposed on the second housing 220 side. The antenna modules 219 and 229 may include, for example, a near-field communication (NFC) antenna, a wireless charging antenna, and/or a magnetic secure transmission (MST) antenna, thereby enabling short-range communication with an external device or wirelessly transmitting and receiving power required for charging. In another embodiment, an antenna structure may be provided by a portion of a side surface bezel structure and/or a bracket assembly of the foldable housing 210, 220, 260, or a combination thereof.

According to an embodiment, the rear surface covers 240 and 250 may include a first rear surface cover 240 and a second rear surface cover 250. The rear surface covers 240 and 250 may be coupled to the foldable housing 210, 220, 260 to protect the above-described components (e.g., the printed circuit boards 216 and 226, the batteries 215 and 225, the flexible connection member 280, or the antenna modules 219 and 229) disposed within the foldable housing 210, 220, 260. As described above, the rear surface covers 240 and 250 may be integrated with the foldable housing 210, 220, 260.

According to an embodiment of the disclosure, the protective members 206 and/or the decorative covers 218 and 228 may protect at least partially the periphery of the first display 230. The protective members 206 can be disposed between the periphery of the first area 231a (see FIG. 2) of the first display 230 and the inner wall of the first housing 210 and/or between the periphery of the second area 231b (see FIG. 2) of the first display 230 and the inner wall of the second housing 220 to prevent the periphery of the first display 230 from being in direct contact with the inner walls of the housings 210 and 220.

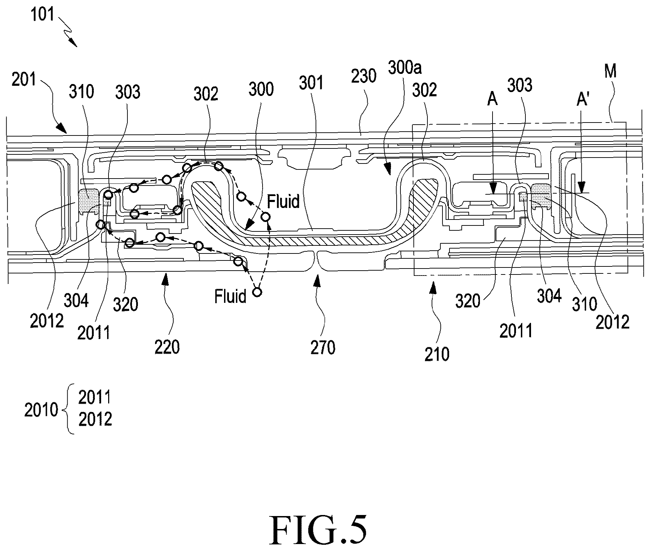

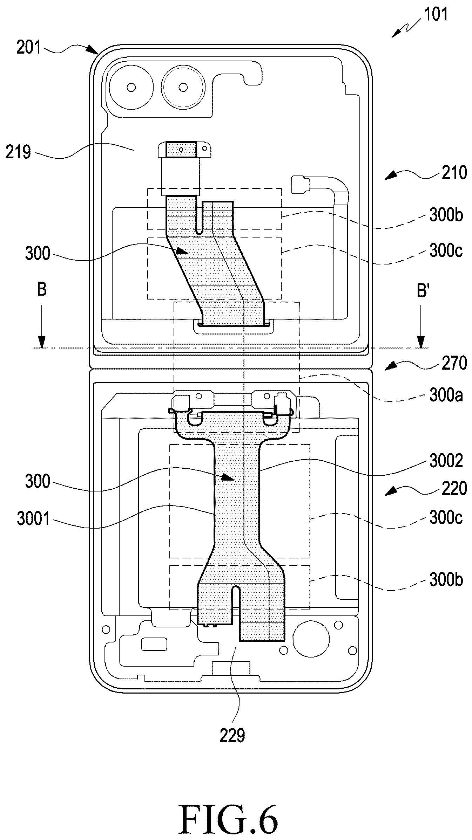

FIG. 5 illustrate a partial cross-sectional view of the electronic device 101 in the unfolded state (e.g., the state of the electronic device 101 in FIG. 2). The components to be described with reference to FIG. 5 may be partially or wholly the same as the components described with reference to FIGS. 1 to 4. The components to be described with reference to FIG. 5 may be partially or wholly the same as the components to be described with reference to FIGS. 6 to 15.

According to an embodiment, the electronic device 101 may include a housing 201 including a first housing 210 and a second housing 220. The electronic device 101 may include a hinge 270 that rotatably connects the first housing 210 and the second housing 220. The electronic device 101 may include a display 230. The descriptions of the housing 201, the display 230, and the hinge 270 may be applied equally to the descriptions of the components described with reference to FIGS. 1 to 4 (e.g., the housing 201, the display 230, and the hinge structure 270).

According to an embodiment, the electronic device 101 may include a flexible circuit board 300. The flexible circuit board 300 may be disposed inside the housing 201. The flexible circuit board 300 may be disposed to correspond to each of the first housing 210 and the second housing 220. The flexible circuit board 300 may be disposed across the hinge 270. At least a portion of the flexible circuit board 300 may be deformable.

According to an embodiment, the flexible circuit board 300 may include a first substrate portion 301. The first substrate portion 301 may be positioned to correspond to the hinge 270. The first substrate portion 301 may be deformable. The first substrate portion 301 may be deformable by rotation of the hinge 270. The first substrate portion 301 may be referred to as a "deformable portion".

According to an embodiment, the flexible circuit board 300 may include a second substrate portion 302. The second substrate portion 302 may extend in a curved form. The second substrate portion 302 may extend from the first substrate portion 301 in a direction away from the hinge 270.

According to an embodiment, the flexible circuit board 300 may include a third substrate portion 303. The third substrate portion 303 may extend in a curved form. The third substrate portion 303 may be disposed within each of the first housing 210 and the second housing 220. The second substrate portion 302 may be positioned between the first substrate portion 301 and the third substrate portion 303. The third substrate portion 303 may be offset from the hinge 270. The third substrate portion 303 may be referred to as a "bending portion".

According to an embodiment, the electronic device 101 may include a support member 2010. The support member 2010 may be positioned inside the housing 201 and may be a portion of the bracket assemblies 217 and 227 disposed inside the housing 201. The support member 2010 according to an embodiment of the disclosure may include a first support portion 2012 and a second support portion 2011 disposed adjacent to the flexible circuit board 300. The second support portion 2011 may face at least a portion of the flexible circuit board 300. The second support portion 2011 may face the fourth substrate portion 304. The fourth substrate portion 304 may be in contact with the second support portion 2011. At least a portion of the flexible circuit board 300 may be disposed between the second support portion 2011 and the sealer 310. The fourth substrate portion 304 may be disposed between the second support portion 2011 and the sealer 310.

According to an embodiment, the flexible circuit board 300 may include a fourth substrate portion 304. The fourth substrate portion 304 may extend from the bending portion 303. The fourth substrate portion 304 may be positioned between the support portion 2011 and the sealer 310 within the housing 201. The fourth substrate portion 304 may be pressed by the support portion 2011 and the sealer 310. The fourth substrate portion 304 may be referred to as an "extending portion". The fourth substrate portion 304 may be referred to as a "pressed portion".

According to an embodiment, the electronic device 101 may include a sealer 310. The sealer may be configured to block passage of water (and/or other material) into an interior of the housing. The sealer 310 may include a waterproofing material. The sealer 310 may include a sealing material. The sealer 310 may be disposed within the housing 201. The sealer 310 may be in contact with the flexible circuit board 300. The sealer 310 may press at least a portion of the flexible circuit board 300. The sealer 310 may press the fourth substrate portion 304.

According to an embodiment, the electronic device 101 may include a gasket 320. The gasket 320 may include a cured in place gasket (CIPG). The gasket 320 may be in contact with the flexible circuit board 300. The gasket 320 may press at least a portion of the flexible circuit board 300. The gasket 320 may fill an empty space formed by the flexible circuit board 300.

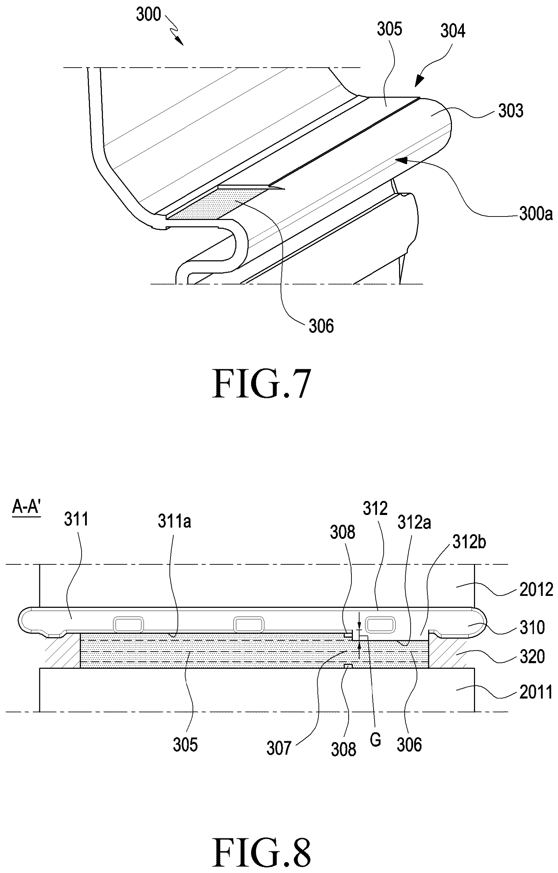

FIG. 6 is a view illustrating a portion of the housing 201 and the flexible circuit board 300. FIG. 7 is an enlarged view of a portion of the flexible circuit board 300. The components to be described with reference to FIGS. 6 and 7 may be partially or wholly the same as the components described with reference to FIGS. 1 to 5. The components to be described with reference to FIGS. 6 and 7 may be partially or wholly the same as the components to be described with reference to FIGS. 8 to 15.

According to an embodiment, the flexible circuit board 300 may be disposed across the housing 201. A portion of the flexible circuit board 300 may be disposed to correspond to the hinge 270. The flexible circuit board 300 may extend from the first housing 210 across the hinge 270 toward the second housing 220. The direction in which the flexible circuit board 300 extends from the first housing 210 across the hinge 270 toward the second housing 220 when the electronic device 101 is in an unfolded state may be referred to as a "first direction", "length direction", or "y direction" (as shown in FIG.4).

According to an embodiment, the flexible circuit board 300 may be connected to antenna modules 219 and 229. The descriptions of the antenna modules 219 and 229 may be equally applicable to the descriptions of the antenna modules (e.g., the antenna module 197 in FIG. 1 and the antenna modules 219 and 229 in FIG. 2) described with reference to FIGS. 1 to 4. The flexible circuit board 300 may be connected to a printed circuit board (e.g., the printed circuit boards 216 and 226 in FIG. 4). The flexible circuit board 300 can connect the antenna modules 219 and 229 to the printed circuit boards 216 and 226. The antenna modules 219 and 229 may be referred to as "antennas" or "conductive portions".

According to an embodiment, the flexible circuit board 300 may include a third substrate portion 303 and a fourth substrate portion 304. At least a portion of the flexible circuit board 300 may be bent. The flexible circuit board 300 may extend toward the ends of the first housing 210 and the second housing 220 while being at least partially bent. The flexible circuit board 300 may be connected to the antenna modules 219 and 229 disposed at respective ends of the first housing 210 and the second housing 220.

According to an embodiment, the flexible circuit board 300 may include a first portion 305. The flexible circuit board 300 may include a second portion 306. The first portion 305 and the second portion 306 may be configured integrally. The first portion 305 may be configured to transmit a first signal. The second portion 306 may be configured to transmit a second signal. A type of the first signal may be different to a type of the second signal. The first signal may include a signal transmitted from (or to) the display 230. The first signal may include a signal transmitted from (or to) the batteries 215 and 225. For example, the first signal may include a signal transmitted from (or to) an external storage medium (e.g., a USB). The second signal may include an RF signal. The second signal may include a signal transmitted from (or to) the exterior of the electronic device 101. The second signal may include a communication signal (from or to) outside the electronic device 101.

According to an embodiment, the first portion 305 may include a plurality of logic lines that process data. The second portion 306 may include a plurality of signal lines that transmit signals. The first portion 305 may be connected to a display (e.g., the display 230 of FIG. 4), a battery (e.g., the batteries 215 and 225 in FIG. 4), or an external storage medium (e.g., a USB). The first portion 305 may supply power to the display 230 and the batteries 215 and 225. The first portion 305 may process data generated from the display 230. The first portion 305 may process data from an external storage medium (e.g., a USB). The second portion 306 may be connected to the antenna modules 219 and 229. The second portion 306 may transmit a signal through (or to, or from) the antenna modules 219 and 229. The second portion 306 may transmit an RF signal.

According to an embodiment, the flexible circuit board 300 can include a first wire 3001 and a second wire 3002. The first wire 3001 and the second wire 3002 can be formed as an integrated body. The first wire 3001 may include a plurality of logic lines that process the data described above. The first wire 3001 may be referred to as a "logic wire". The second wire 3002 may include a plurality of signal lines that transmit the signals described above. The second wire 3002 may be referred to as a "signal wire". The first wire 3001 and the second wire 3002 may extend from a position corresponding to the first housing 210 across the hinge 270 toward a position corresponding to the second housing 220.

In an embodiment, the thickness of the first portion 305 and the thickness of the second portion 306 may be different from each other. The thickness may be defined a third direction which is perpendicular to the first direction and second direction. The third direction may be perpendicular to the display surface 210a and 210b when the electronic device 101 is in an unfolded state. The third direction may also be referred to as the "thickness direction" or the "z direction" (as shown in FIG. 4). The first portion 305 may be a portion of the first wire 3001. The second portion 306 may be a portion of the second wire 3002.

According to an embodiment, the flexible circuit board 300 may include a first area 300a. The first area 300a may be a portion of the flexible circuit board 300 positioned to correspond to the hinge 270. The flexible circuit board 300 may include a second area 300b. The second area 300b may be a portion of the flexible circuit board 300 that is connected to an electrical component (e.g., a printed circuit board or an antenna module). The flexible circuit board 300 may include a third area 300c. The third area 300c may connect the first area 300a and the second area 300b.

According to an embodiment, the first area 300a of the flexible circuit board 300 may be divided into a first portion 305 and a second portion 306 having different thicknesses. The second area 300b of the flexible circuit board 300 may be divided into a first portion 305 and a second portion 306 having different thicknesses. The third area 300c of the flexible circuit board 300 may include portions of the first wire 3001 and the second wire 3002 having substantially the same thickness. As can be seen in FIG. 7, the first portion (305) and the second portion (306) of the flexible circuit board (300) may be arranged in a second direction perpendicular with respect to the first direction. The first portion (305) and the second portion (306) of the flexible circuit board (300) may be disposed side by side in the second direction, which may include a third portion (307) disposed between the first portion (305) and the second portion (306) in some embodiments. The second direction may also be referred to as a "width direction" or an "x direction" (as shown in FIG. 4).

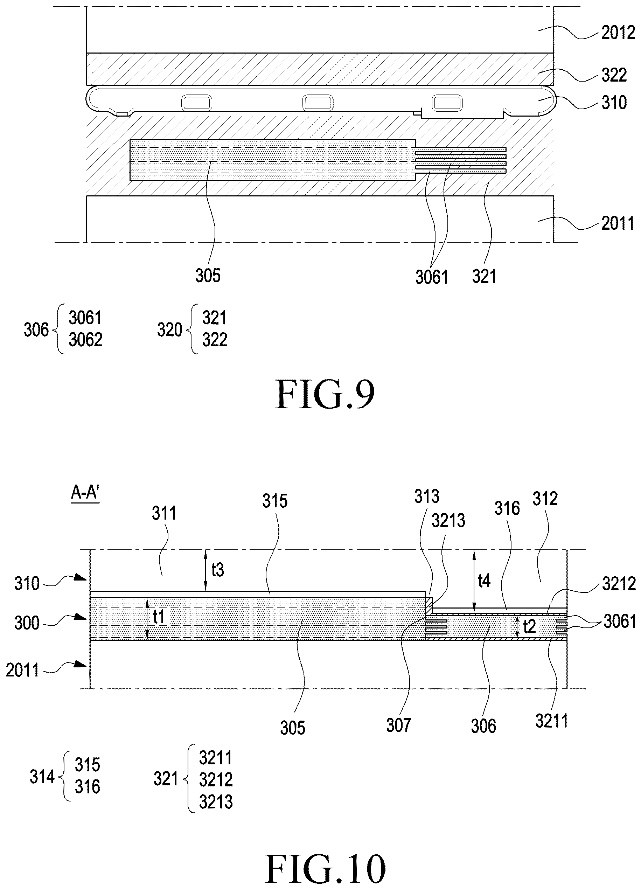

FIG. 8 is a cross-sectional view taken along reference line A-A' illustrated in FIG. 5. FIG. 9 is an exploded view of the structure of FIG. 8. The components described with reference to FIGS. 8 and 9 may be partially or wholly the same as the components described with reference to FIGS. 1 to 7. The components described with reference to FIGS. 8 and 9 may be partially or wholly the same as the components described with reference to FIGS. 10 to 15.

According to an embodiment, the first portion 305 and the second portion 306 may be integrated. The flexible circuit board 300 may include a third portion 307. The third portion 307 may be a portion of the flexible circuit board 300 connecting the first portion 305 and the second portion 306. The third portion 307 may be the connection portion between the first portion 305 and the second portion 306.

According to an embodiment, the first portion 305 may be disposed between the sealer 310 and the second support portion 2011. The second portion 306 may be disposed between the sealer 310 and the second support portion 2011. The third portion 307 may be disposed between the sealer 310 and the second support portion 2011.

According to an embodiment, the flexible circuit board 300 may include a recess 308. The recess 308 may be formed due to a thickness difference between the first portion 305 and the second portion 306. The recess 308 may be formed in the third portion 307. At least a portion of the gasket 320 may be disposed in the inner space of the recess 308. The gasket 320 may be in contact with the recess 308. The gasket 320 may fill the space formed by the recess 308. For example, at least a portion of the gasket 320 may be disposed between the recess 308 and the second support portion 2011. For example, at least a portion of the gasket 320 may be disposed between the recess 308 and the sealer 310.

According to an embodiment, the first support portion 2012 may be in contact with the sealer 310. The sealer 310 may be disposed between the first support portion 2012 and the flexible circuit board 300. The first support portion 2012 may provide, to the sealer 310, a compressive force directed to the flexible circuit board 300.

According to an embodiment, the gasket 320 may include a first gasket 321 and a second gasket 322. The first gasket 321 may be disposed between the sealer 310 and the second support portion 2011. At least a portion of the first gasket 321 may be disposed between the recess 308 and the second support portion 2011. At least a portion of the first gasket 321 may be disposed between the recess 308 and the sealer 310. The first gasket 321 may seal the gap between the second support portion 2011 and the flexible circuit board 300. The first gasket 321 may seal the gap between the sealer 310 and the flexible circuit board 300. The second gasket 322 may be disposed between the sealer 310 and the first support portion 2012. The second gasket 322 may seal the gap between the sealer 310 and the first support portion 2012.

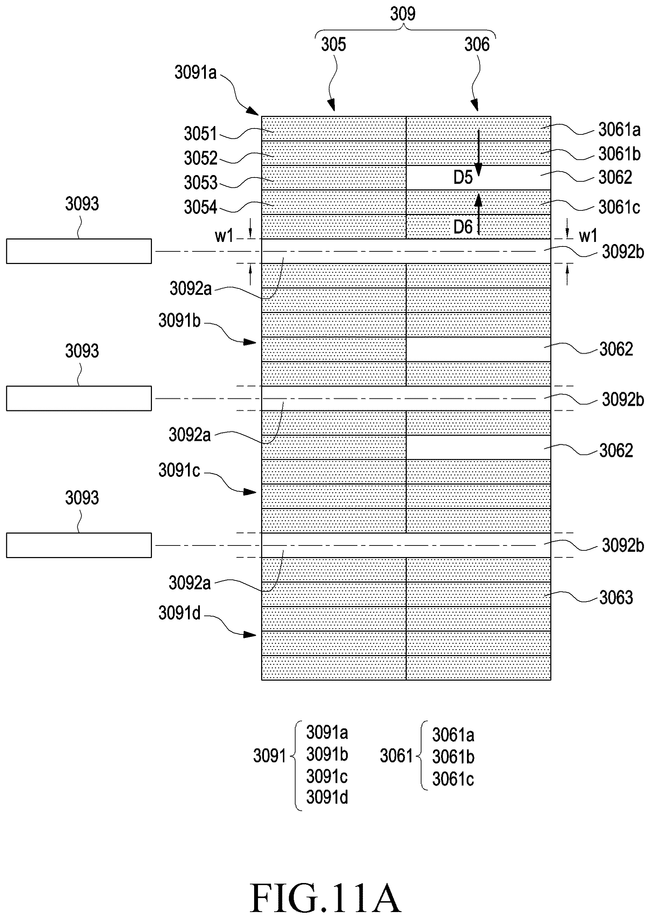

According to an embodiment, the sealer 310 may include a first sealing portion 311 and a second sealing portion 312. The first sealing portion 311 may include a first surface 311a that is in contact with the first portion 305. The second sealing portion 312 may include a second surface 312a that is in contact with the second portion 306. The second surface 312a may be dislocated from the first surface 311a. For example, the second surface 312a and the first surface 311a may be on different planes. The second surface 312a and the first surface 311a may be on different planes with respect to a third direction (i.e. a "thickness" direction) perpendicular to the first direction and second direction. The different planes may be parallel. The second sealing portion 312 may include a protruding portion 312b. The protruding portion 312b may protrude from the first surface 311a toward the second portion 306. The protruding portion 312b may include the second surface 312a. The protruding portion 312b may protrude toward the flexible circuit board 300 by a protruding distance G from the first surface 311a. The protruding distance G may be greater than the thickness of a metal layer 3063 which will be described with reference to FIGS. 11A to 11C. The sealer 310 according to an embodiment of the disclosure may compensate for the compressive force on the second portion 306, which is thinner than the first portion 305 due to the removal of the metal layer 3063, via the protruding portion 312b.

FIG. 10 is a conceptual cross-sectional view taken along reference line A-A' in FIG. 5. The components to be described with reference to FIG. 10 may be partially or wholly the same as the components described with reference to FIGS. 1 to 9. The components to be described with reference to FIG. 10 may be partially or wholly the same as the components to be described with reference to FIGS. 11A to 15.

According to an embodiment, the flexible circuit board 300 may include a first portion 305 and a second portion 306 having different thicknesses. The flexible circuit board 300 may include a third portion 307 connecting the first portion 305 and the second portion 306.

According to an embodiment, the first portion 305 may have a first thickness t1. The second portion 306 may have a second thickness t2 smaller than the first thickness t1.

According to an embodiment, the sealer 310 may include a first sealing portion 311 and a second sealing portion 312. The first sealing portion 311 and the second sealing portion 312 may be integrated. The thickness of the first sealing portion 311 and the thickness of the second sealing portion 312 may be different from each other. The first sealing portion 311 may have a third thickness t3. The second sealing portion 312 may have a fourth thickness t4 greater than the third thickness t3.

According to an embodiment, the first sealing portion 311 may correspond to the first portion 305. The first sealing portion 311 may be in contact with the first portion 305. The second sealing portion 312 may correspond to the second portion 306. The second sealing portion 312 may be in contact with the second portion 306. According to an embodiment of the disclosure, the sealer 310 may reduce the penetration of fluid through the flexible circuit board 300 by forming the first sealing portion 311 and the second sealing portion 312 to have different thicknesses to correspond to the first portion 305 and the second portion 306 of the flexible circuit board 300, which have different thicknesses.

According to an embodiment, the sealer 310 may include a corner portion 313. The corner portion 313 may connect the first sealing portion 311 and the second sealing portion 312. The corner portion 313 may extend in a curved form or may form a step. The corner portion 313 may correspond to the third portion 307 of the flexible circuit board 300.

According to an embodiment, the sealer 310 may include an overlap portion 314. The overlap portion 314 may overlap the flexible circuit board 300. The overlap portion 314 may be a portion of the sealer 310 that is aligned with at least a portion of the flexible circuit board 300 with respect to the third (z) direction. The overlap portion 314 may be a portion of the sealer 310 that covers at least a portion of the flexible circuit board 300.

According to an embodiment, the sealer 310 may include a first overlap portion 315. The first overlap portion 315 may overlap the first portion 305. The first overlap portion 315 may be a portion of the sealer 310 that is aligned with at least a portion of the first portion 305 with respect to the third (z) direction. The first overlap portion 315 may be a portion of the first sealing portion 311 that covers at least a portion of the first portion 305.

According to an embodiment, the sealer 310 may include a second overlap portion 316. The second overlap portion 316 may overlap the second portion 306. The second overlap portion 316 may be a portion of the sealer 310 that is aligned with at least a portion of the second portion 306 with respect to the third (z) direction. The second overlap portion 316 may be a portion of the second sealing portion 312 that covers at least a portion of the second portion 306.

According to an embodiment, the first gasket 321 may include a first gasket portion 3211. The first gasket portion 3211 may be disposed between the second portion 306 and the second support portion 2011.

According to an embodiment, the first gasket 321 may include a second gasket portion 3212. The second gasket portion 3212 may be disposed between the sealer 310 and the second portion 306. The second gasket portion 3212 may be disposed between the second sealing portion 312 and the second portion 306. The second gasket portion 3212 may overlap the second overlap portion 316.

According to an embodiment, the first gasket 321 may include a third gasket portion 3213. The third gasket portion 3213 may be disposed between the corner portion 313 and the third portion 307. The third gasket portion 3213 may be disposed between the first portion 305 and the second sealing portion 312.

According to an embodiment, the sealer 310 may compress the second portion 306. The sealer 310 may apply a force directed to the second support portion 2011 to the second portion 306 of the flexible circuit board. The second portion 306 of each layer of the flexible circuit board 300 may be compressed by the sealer 310. When the second portion 306 is compressed by the sealer 310, a plurality of layers 3091 may be in contact with each other without a gap.

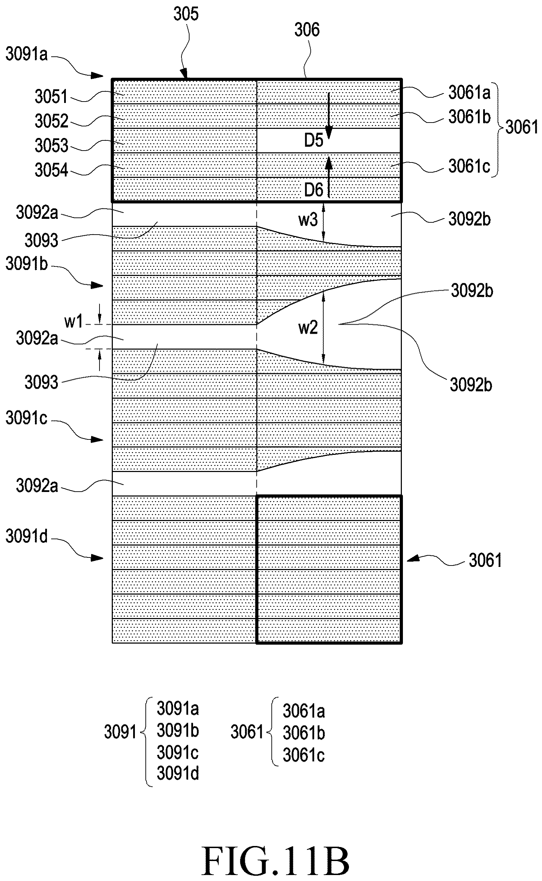

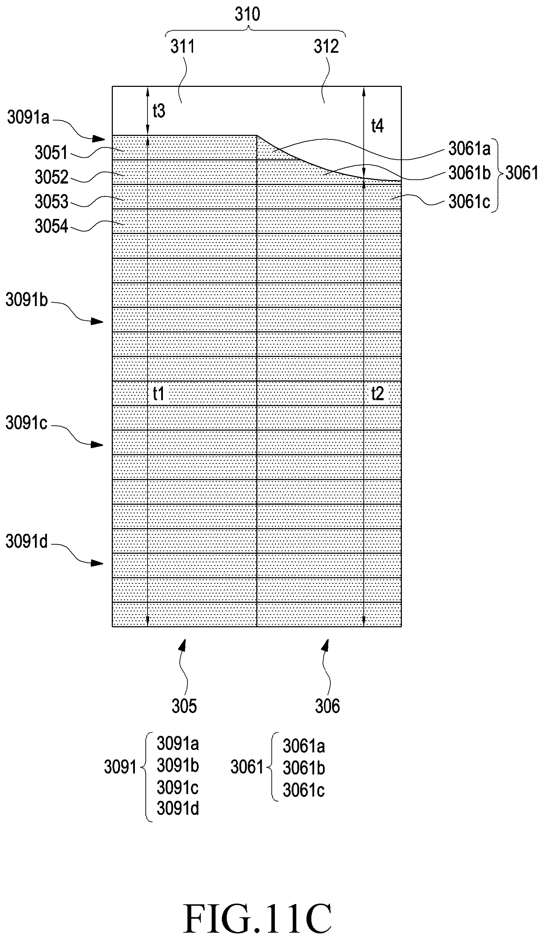

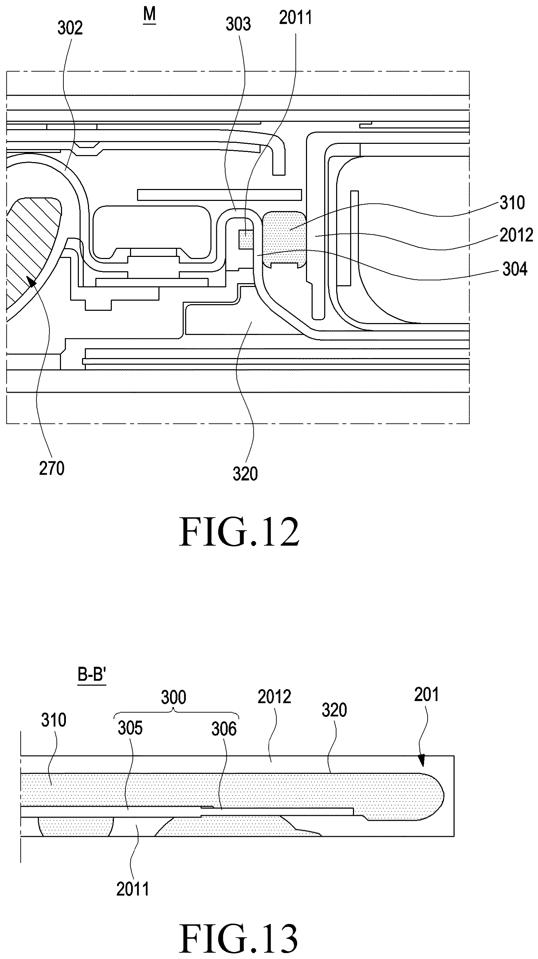

FIG. 11A is a conceptual view illustrating a layer structure 309 of the first portion 305 and the second portion 306 of the flexible circuit board 300. FIG. 11B is a view illustrating the shape change of the layer structure 309 of FIG. 11A. FIG. 11C is a view illustrating the shape change of the layer structure 309 of FIG. 11B. The components described with reference to FIGS. 11A to 11C may be partially or wholly the same as the components described with reference to FIGS. 1 to 10. The components described with reference to FIGS. 11A to 11C may be partially or wholly the same as the components described with reference to FIGS. 12 to 15.

According to an embodiment, the flexible circuit board 300 may include a plurality of layers 3091. The plurality of layers 3091 may include a first portion 305 and a second portion 306. Each of the layers 3091a, 3091b, 3091c, and 3091d constituting the plurality of layers 3091 of the flexible circuit board 300 may include a plurality of sub-layers 3051, 3052, 3053, and 3054. The first portion 305 and the second portion 306 may include different types of signal lines. The signal line disposed in the first portion 305 may be referred to as a first signal line, and the signal line disposed in the second portion 306 may be referred to as a second signal line.

According to an embodiment, the signal line disposed in the first portion 305 may be positioned in a metal layer 3053 of the first portion 305. The signal line disposed in the second portion 306 may be positioned in a metal layer 3063 of the second portion 306. The first signal line and the second signal line may transmit different types of signals. The first signal may be transmitted through the first signal line. The second signal may be transmitted through the second signal line.

According to an embodiment, the second portion 306 may be formed by removing at least one sub-layer from the plurality of sub-layers constituting each layer. That is, in at least one of the layers in the second portion 306, at least one sub-layer may be removed. The thickness of the first portion 305 and the thickness of the second portion 306 may be different from each other (e.g., the first thickness t1 of the first portion 305 and the second thickness t2 of the second portion 306 as illustrated in FIG. 11C).

According to an embodiment, the first portion 305 may include a metal sub-layer 3053. The metal sub-layer 3053 may include a copper material. A portion corresponding to the second portion 306 in at least one layer among the plurality of layers 3091 may not include the metal sub-layer 3053 of the first portion 305. According to an embodiment of the disclosure, the flexible circuit board 300 may have different thicknesses between the first portion 305 and the second portion 306 thereof by removing the metal sub-layer 3063 from the portion 3062 corresponding to the second portion 306 of at least one layer among the plurality of layers 3091.

According to an embodiment of the disclosure, the flexible circuit board 300 may reduce signal interference between signal lines disposed in the second portion 306 by removing the metal sub-layer 3063 from the portion corresponding to the second portion 306 of at least one layer among the plurality of layers 3091. According to an embodiment of the disclosure, the first portion 305 may be used as a signal line for processing data, and the second portion 306 may be used as a signal line for communication via an antenna. By applying a compressive force to the second portion 306, the sealer (e.g., the sealer 310 in FIG. 10) according to an embodiment of the disclosure may remove the spaces formed between the plurality of layers 3091 by removing the portions corresponding to the metal sub-layers 3063. The sealer 310 according to an embodiment of the disclosure may reduce the penetration of fluid through the second portion 306 by removing the spaces.

According to an embodiment, a portion corresponding to the second portion 306 in at least one layer among the plurality of layers 3091 may include a metal sub-layer 3063. The thickness of a layer 3091d of the second portion 306 including the metal sub-layer 3063 may be substantially the same as the thickness of the layer 3091d of the first portion 305 including the metal sub-layer 3063.

According to an embodiment, the layer structure 309 may include a plurality of layers 3091. The plurality of layers 3091 may include a first layer 3091a, a second layer 3091b, a third layer 3091c, and a fourth layer 3091d. The plurality of layers 3091 may be spaced apart from each other. The layer structure 309 may include spaces 3092 each formed between adjacent ones of the plurality of layers 3091. The flexible circuit board 300 may include a spacer 3093 disposed in each space 3092 formed between adjacent ones of the plurality of layers 3091. Each spacer 3093 may interconnect adjacent ones of respective layers 3091a, 3091b, 3091c, and 3091d. The spacers 3093 may separate the respective layers 3091a, 3091b, 3091c, and 3091d from each other. The spacers 3093 may include a polymer material. The spacers 3093 may include a rubber material that is expandable or contractible. The spacers 3093 may include a sealer or waterproofing member.

According to an embodiment, the spaces 3092 between the layers 3091 may include first spaces 3092a corresponding to the first portion 305 and second spaces 3092b corresponding to the second portion 306. The first spaces 3092a may be portions of the spaces 3092 positioned within the first portion 305. The second spaces 3092b may be portions of the spaces 3092 located within the second portion 306. The spacers 3093 may fill the first and second spaces 3092a and 3092b.

According to an embodiment, the first portion 305 may include portions of the layers 3091, and the second portion 306 may include the remaining portions of the layers 3091. The layer structure 309 may be divided into a portion corresponding to the first portion 305 and a portion corresponding to the second portion 306.

According to an embodiment, the first portion 305 may include a first film sub-layer 3051, a first adhesive sub-layer 3052, a metal sub-layer 3053, and a first polymer sub-layer 3054. The portion corresponding to the first portion 305 of each of the layers 3091a, 3091b, 3091c, and 3091d may include a first film sub-layer 3051, a first adhesive sub-layer 3052, a metal sub-layer 3053, and a first polymer sub-layer 3054.

According to an embodiment, the portion corresponding to the second portion 306 of each of the layers 3091a, 3091b, 3091c, and 3091d may include a second film sub-layer 3061a, a second adhesive sub-layer or line 3061b, and a second polymer sub-layer 3061c.

According to an embodiment, the second film sub-layer 3061a of the second portion 306 may be formed integrally with the first film sub-layer 3051 of the first portion 305. The second film sub-layer 3061a of the second portion 306 may be aligned with the first film sub-layer 3051 of the first portion 305. The second adhesive sub-layer 3061b of the second portion 306 may be formed integrally with the first adhesive sub-layer 3052 of the first portion 305. The second adhesive sub-layer 3061b of the second portion 306 may be aligned with the first adhesive sub-layer 3052 of the first portion 305. The second polymer sub-layer 3061c of the second portion 306 may be formed integrally with the first polymer sub-layer 3054 of the first portion 305. The second polymer sub-layer 3061c of the second portion 306 may be aligned with the first polymer sub-layer 3054 of the first portion 305.

According to an embodiment, a portion corresponding to the second portion 306 in at least one layer of the plurality of layers 3091 may include a portion formed by bonding the second adhesive sub-layer 3061b and the second polymer sub-layer 3061c to each other after the metal sub-layer 3063 between the second adhesive sub-layer 3061b and the second polymer sub-layer 3061c is removed. For example, referring to the change from the state of FIG. 11A to the state of FIG. 11B, after the metal sub-layers are removed, a second adhesive sub-layer 3061b of the second portion 306 may move in a first direction D5 toward the second polymer sub-layer 3061c, and the second polymer sub-layer 3061c of the second portion 306 can move in the second direction D6 toward the second adhesive sub-layer 3061b, and the second adhesive sub-layer 3061b and the second polymer sub-layer 3061c may be bonded to each other.

According to an embodiment, the layers 3091a, 3091b, 3091c, and 3091d may be spaced apart from each other, and a space 3092 may be formed between each adjacent ones of the layers 3091a, 3091b, 3091c, and 3091d. For example, at least a portion of the first layer 3091a may be separable with respect to at least a portion of the second layer 3091b. A spacer 3093 may be disposed in the space 3092 and fill the space 3092. For example, a space 3092 may be formed between the first layer 3091a and the second layer 3091b. The spaces 3092 between the layers 3091 may include first spaces 3092a corresponding to the first portion 305 and second spaces 3092b corresponding to the second portion 306. The spacer 3093 may be disposed in each of the first and second spaces 3092a and 3092b. The first width w1 of the first spaces 3092a may be smaller than the second width w2 of the second spaces 3092b. For example, the first distance w1 between the layers 3091a, 3091b, 3091c, and 3091d within the first portion 305 may be smaller than the second distance w2 or w3 between the layers 3091a, 3091b, 3091c, and 3091d within the second portion 306. According to an embodiment of the disclosure, the flexible circuit board 300 may be formed such that the second distance w2 is larger than the first distance w1 due to the removal of the gaps 3062 illustrated in FIG. 11A.

According to an embodiment, the sealer 310 may include a first sealing portion 311 corresponding to the first portion 305 and a second sealing portion 312 corresponding to the second portion 306. The first sealing portion 311 may compress the first portion 305. The second sealing portion 312 may compress the second portion 306. The third thickness t3 of the first sealing portion 311 may be smaller than the fourth thickness t4 of the second sealing portion 312.

According to an embodiment, the layers 3091a, 3091b, 3091c, and 3091d of the flexible circuit board 300 may be compressed by the sealer 310.

According to an embodiment, when referring to the change in the layer structure 309 from FIG. 11B to FIG. 11C, due to the difference between the first distance w1 of the first space 3092a formed in the first portion 305 and the second distance w2 of the second space 3092b formed in the second portion 306, the first thickness t1 in the first portion 305 may be greater than the second thickness t2 in the second portion 306. In the sealer 310 according to an embodiment of the disclosure, the first sealing portion 311 and the second sealing portion 312 may have different thicknesses to respectively correspond to the first portion 305 and the second portion 306 having different thicknesses t1 and t2.

In the flexible circuit board 300 according to an embodiment of the disclosure, the first portion 305 and the second portion 306 of the flexible circuit board 300 may be used for different purposes due to the removal of metal layers from the second portion 306. The flexible circuit board 300 according to an embodiment of the disclosure may have a thickness difference between the first portion 305 and the second portion 306 due to the removal of metal layers. In the flexible circuit board 300 according to an embodiment of the disclosure, the size of the first space 3092a formed in the first portion 305 and the size of the second space 3092b formed in the second portion 306 may differ due to the removal of metal layers. The sealer 310 according to an embodiment of the disclosure may have the first sealing portion 311 and the second sealing portion 312 formed with different thicknesses to correspond to the thickness difference between the first portion 305 and the second portion 306. The sealer 310 according to an embodiment of the disclosure may reduce the penetration of fluid into the flexible circuit board 300 by compensating for the thickness difference between the first portion 305 and the second portion 306 of the flexible circuit board 300, which have different thicknesses, through the formation of the first sealing portion 311 and the second sealing portion 312 with different thicknesses.

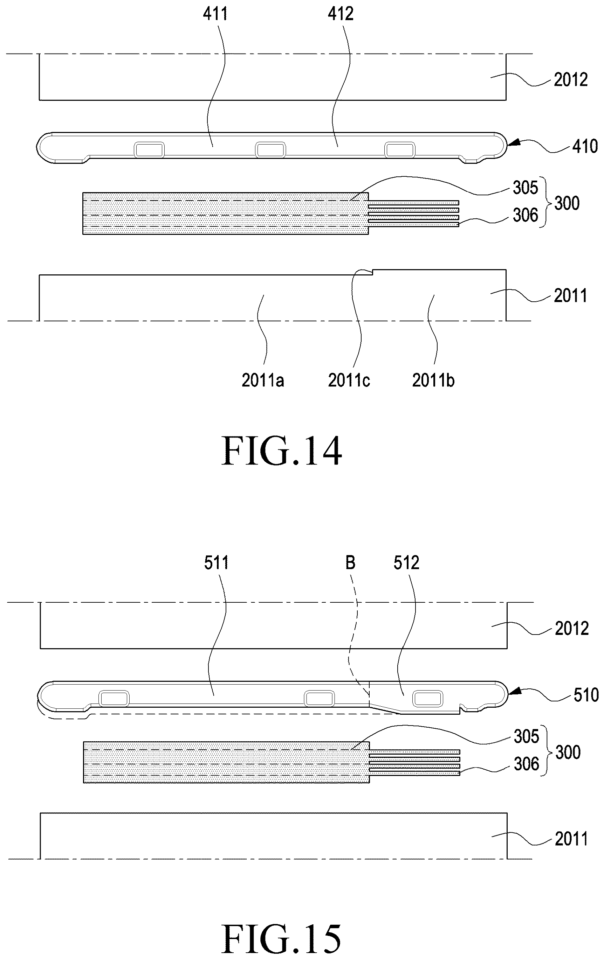

FIG. 12 is an enlarged view of portion M of FIG. 5. FIG. 13 is a cross-sectional view taken along reference line B-B' illustrated in FIG. 6. The components described with reference to FIGS. 12 and 13 may be partially or wholly the same as the components described with reference to FIGS. 1 to 11. The components to be described with reference to FIGS. 12 and 13 may be partially or wholly the same as the components to be described with reference to FIGS. 14 and 15.

According to an embodiment, the fourth substrate portion 304 may extend from the curved third substrate portion 303. The fourth substrate portion 304 may pass through the space between the sealer 310 and the second support portion 2011. The gasket 320 may fill the empty space formed by the fourth substrate portion 304.

According to an embodiment, the sealer 310 may be disposed between the second support portion 2011 and the first support portion 2012. The sealer 310 may be compressed by the second support portion 2011 and the first support portion 2012. The sealer 310 may include an elastic material. The sealer 310 may press the first portion 305 and the second portion 306 of the flexible circuit board 300. The gasket 320 may fill the space between the sealer 310 and the first support portion 2012.

FIG. 14 is an exploded view of the second support portion 2011, the sealer 410, the flexible circuit board 300, and the first support portion 2012 according to an embodiment of the disclosure. The components to be described with reference to FIG. 14 may be partially or wholly the same as the components to be described with reference to FIGS. 1 to 13.

According to an embodiment, the electronic device 101 may include a flexible circuit board 300 and a support member 2010 including a first support portion 2012 and a second support portion 2011. The thickness of the second support portion 2011 in the area 2011a that comes into contact with the first portion 305 of the flexible circuit board 300 may be smaller than the thickness in the area 2011b that comes into contact with the second portion 306. The contact surface of the area 2011a that comes into contact with the first portion 305 of the flexible circuit board 300 may be recessed from the contact surface of the area 2011b that comes into contact with the second portion 306.

According to an embodiment, the electronic device 101 may include a sealer 410. The sealer 410 may include a first sealing portion 411 corresponding to the first portion 305 and a second sealing portion 412 corresponding to the second portion 306. The thickness of the first sealing portion 411 and the thickness of the second sealing portion 412 may be the same.

According to an embodiment, the first support portion 2011 may include a step portion 2011c. The step portion 4011c may be formed in a curved form.

According to the embodiment of FIG. 14, by forming the thickness of the first support portion 2011 differently, the penetration of fluid through the first portion 305 and the second portion 306 of the flexible circuit board 300 having different thicknesses may be reduced.

FIG. 15 is an exploded view of a support member 2010, a sealer 510, and a flexible circuit board 300 according to an embodiment of the disclosure. The components to be described with reference to FIG. 15 may be partially or wholly the same as the components to be described with reference to FIGS. 1 to 13.

According to an embodiment, the electronic device 101 may include a flexible circuit board 300 and a support member 2010 including a first support portion 2012 and a second support portion 2011. The descriptions of the flexible circuit board 300 and the support member 2010 may be applied equally to the descriptions of the flexible circuit board 300 and the support member 2010 described with reference to FIGS. 1 to 13.

According to an embodiment, the electronic device 101 may include a sealer 510. The sealer 510 may include a first sealing portion 511 corresponding to the first portion 305 and a second sealing portion 512 corresponding to the second portion 306. The first sealing portion 511 and the second sealing portion 512 may be joined to each other based on the boundary surface B. As an example, the sealer 510 may be manufactured by joining the first sealing portion 511 and the second sealing portion 512 having different moduli (e.g. elastic moduli) through dual injection molding. The thickness of the first sealing portion 511 and the thickness of the second sealing portion 512 may be the same.

According to an embodiment, the first modulus (e.g. elastic modulus) of the first sealing portion 511 may be smaller than the second (e.g. elastic modulus) modulus of the second sealing portion 512. The first strain of the first sealing portion 511 may be larger than the second strain of the second sealing portion 512. The first sealing portion 511 may have a greater strain than the second sealing portion 512 because the thickness of the first portion 305 is larger than the thickness of the second portion 306. The second sealing portion 512 may have a smaller strain than the first sealing portion 511 because the thickness of the second portion 306 is smaller than the thickness of the first portion 305. The pressure applied to the first portion 305 and the pressure applied to the second portion 306 may be the same. Since the first modulus is smaller than the second modulus and the first strain is larger than the second strain, the pressure applied to the first portion 305 and the pressure applied to the second portion 306 may be the same. The pressure may be a product of the modulus and the strain.

An electronic device may include a first housing and a second housing that are rotatable relative to each other. The electronic device may include a hinge that rotatably connects the first housing and the second housing. The electronic device may include a deformable flexible circuit board that extends across the hinge. The flexible circuit board may include a first portion and a second portion that have different thicknesses. The flexible circuit board may be disposed inside the housing, and when the thicknesses of the first portion and the second portion are different, fluid may penetrate toward the flexible circuit board.

The present disclosure may improve the waterproof performance of an electronic device.

The present disclosure may reduce the penetration of fluid into the flexible circuit board.

The problems that the disclosure seeks to solve are not limited to the aforementioned problems, and may be expanded in various ways without departing from the spirit and scope of the disclosure.

According to various embodiments of the disclosure, an electronic device may be improved in terms of waterproof performance by partially varying the thickness of the sealer.

According to various embodiments of the disclosure, penetration of fluid into the flexible circuit board in the electronic device may be reduced by adjusting the thickness of the sealer to correspond to the thickness of the flexible circuit board.

The effects that are capable of being obtained by the disclosure are not limited to those described above, and other effects not described above may be clearly understood by a person ordinarily skilled in the art to which the disclosure belongs based on the following description.

An electronic device (e.g., 101 in FIGS. 1 to 15) according to an embodiment of the disclosure may include a housing (e.g., 201 in FIGS. 1 to 15).

The electronic device (e.g., 101 in FIGS. 1 to 15) according to an embodiment of the disclosure may include a flexible circuit board (e.g., 300 in FIGS. 1 to 15) configured to be deformable.

The electronic device (e.g., 101 in FIGS. 1 to 15) according to an embodiment of the disclosure may include a sealer (e.g., 310 in FIGS. 1 to 15) disposed between the flexible circuit board (e.g., 300 in FIGS. 1 to 15) and the housing (e.g., 201 in FIGS. 1 to 15).

According to an embodiment of the disclosure, the flexible circuit board (e.g., 300 in FIGS. 1 to 15) may include a first portion (e.g., 305 in FIGS. 1 to 15) having a first thickness and configured to process data.

According to an embodiment of the present disclosure, the flexible circuit board (e.g., 300 in FIGS. 1 to 15) may include a second portion (e.g., 306 in FIGS. 1 to 15) having a second thickness smaller than the first thickness and configured to transmit a signal.

According to an embodiment of the disclosure, the sealer (e.g., 310 in FIGS. 1 to 15) may include a first sealing portion (e.g., 311 in FIGS. 1 to 15) disposed to correspond to the first portion (e.g., 305 in FIGS. 1 to 15) and having a third thickness.

According to an embodiment of the disclosure, the sealer (e.g., 310 in FIGS. 1 to 15) may include a second sealing portion (e.g., 312 in FIGS. 1 to 15) disposed to correspond to the second portion (e.g., 306 in FIGS. 1 to 15) and having a fourth thickness greater than the third thickness.

According to an embodiment of the disclosure, the flexible circuit board (e.g., 300 in FIGS. 1 to 15) may include a third portion (e.g., 307 in FIGS. 1 to 15) connecting the first portion (e.g., 305 in FIGS. 1 to 15) and the second portion (e.g., 306 in FIGS. 1 to 15).

According to an embodiment of the disclosure, the sealer (e.g., 310 in FIGS. 1 to 15) may include a corner portion (e.g., 313 in FIGS. 1 to 15) connecting the first sealing portion (e.g., 311 in FIGS. 1 to 15) and the second sealing portion (e.g., 312 in FIGS. 1 to 15) and disposed to correspond to the third portion (e.g., 307 in FIGS. 1 to 15).

According to an embodiment of the disclosure, the sealer (e.g., 310 in FIGS. 1 to 15) may include a first overlap portion (e.g., 315 in FIGS. 1 to 15) that is in contact with the first portion (e.g., 305 in FIGS. 1 to 15) of the flexible circuit board (e.g., 300 in FIGS. 1 to 15).

According to an embodiment of the disclosure, the sealer (e.g., 310 in FIGS. 1 to 15) may include a second overlap portion (e.g., 316 in FIGS. 1 to 15) that is in contact with the second portion (e.g., 306 in FIGS. 1 to 15) of the flexible circuit board (e.g., 300 in FIGS. 1 to 15) and is offset from the first overlap portion (e.g., 315 in FIGS. 1 to 15).

According to an embodiment of the disclosure, the electronic device (e.g., 101 in FIGS. 1 to 15) may include a gasket (e.g., 320 in FIGS. 1 to 15) partially disposed between the flexible circuit board (e.g., 300 in FIGS. 1 to 15) and the sealer (e.g., 310 in FIGS. 1 to 15).

According to an embodiment of the disclosure, the gasket (e.g., 320 in FIGS. 1 to 15) may include a first gasket (e.g., 321 in FIGS. 1 to 15) disposed between the flexible circuit board (e.g., 300 in FIGS. 1 to 15) and the sealer (e.g., 310 in FIGS. 1 to 15).

According to an embodiment of the disclosure, the gasket (e.g., 320 in FIGS. 1 to 15) may include a second gasket (e.g., 322 in FIGS. 1 to 15) disposed between the sealer (e.g., 310 in FIGS. 1 to 15) and the housing (e.g., 201 in FIGS. 1 to 15).

According to an embodiment of the disclosure, the flexible circuit board (e.g., 300 in FIGS. 1 to 15) may include a third portion (e.g., 307 in FIGS. 1 to 15) that connects the first portion (e.g., 305 in FIGS. 1 to 15) and the second portion (e.g., 306 in FIGS. 1 to 15) and at least partially extends in a curved form away from the sealer (e.g., 310 in FIGS. 1 to 15).

According to an embodiment of the disclosure, at least a portion of the gasket (e.g., 320 in FIGS. 1 to 15) may be disposed between the third portion (e.g., 307 in FIGS. 1 to 15) and the sealer (e.g., 310 in FIGS. 1 to 15).

According to an embodiment of the disclosure, the gasket (e.g., 320 in FIGS. 1 to 15) may include a first gasket portion (e.g., 3211 in FIGS. 1 to 15) disposed between the sealer (e.g., 310 in FIGS. 1 to 15) and the flexible circuit board (e.g., 300 in FIGS. 1 to 15).

According to an embodiment of the disclosure, the gasket (e.g., 320 in FIGS. 1 to 15) may include a second gasket portion (e.g., 3212 in FIGS. 1 to 15) disposed between the flexible circuit board (e.g., 300 in FIGS. 1 to 15) and the housing (e.g., 201 in FIGS. 1 to 15).

According to an embodiment of the disclosure, the flexible circuit board (e.g., 300 in FIGS. 1 to 15) may include a recess (e.g., 308 in FIGS. 1 to 15) recessed in a direction away from the sealer (e.g., 310 in FIGS. 1 to 15).

According to an embodiment of the disclosure, at least a portion of the gasket (e.g., 320 in FIGS. 1 to 15) may be disposed between the recess (e.g., 308 in FIGS. 1 to 15) and the sealer (e.g., 310 in FIGS. 1 to 15).

According to an embodiment of the disclosure, the first and second portions (e.g., 305 and 306 in FIGS. 1 to 15) of the flexible circuit board (e.g., 300 in FIGS. 1 to 15) may be disposed between the second support portion (e.g., 2011 in FIGS. 1 to 15) and the sealer (e.g., 310 in FIGS. 1 to 15).

According to an embodiment of the disclosure, the electronic device (e.g., 101 in FIGS. 1 to 15) may include a printed circuit board (e.g., 216 or 226 in FIGS. 1 to 15) disposed inside the housing (e.g., 201 in FIGS. 1 to 15).

According to an embodiment of the disclosure, the electronic device (e.g., 101 in FIGS. 1 to 15) may include an antenna (e.g., 219 or 229 in FIGS. 1 to 15) spaced from the printed circuit board (e.g., 216 or 226 in FIGS. 1 to 15).

According to an embodiment of the disclosure, the first and second portions (e.g., 305 and 306 in FIGS. 1 to 15) of the flexible circuit board (e.g., 300 in FIGS. 1 to 15) may extend from the printed circuit board (e.g., 216 or 226 in FIGS. 1 to 15) toward the antenna (e.g., 219 or 229 in FIGS. 1 to 15).

According to an embodiment of the disclosure, the housing (e.g., 201 in FIGS. 1 to 15) may include a first housing (e.g., 210 in FIGS. 1 to 15).

According to an embodiment of the disclosure, the housing (e.g., 201 in FIGS. 1 to 15) may include a second housing (e.g., 220 in FIGS. 1 to 15) disposed to be rotatable relative to the first housing (e.g., 210 in FIGS. 1 to 15).

According to an embodiment of the disclosure, the electronic device (e.g., 101 in FIGS. 1 to 15) may include a hinge (e.g., 270 in FIGS. 1 to 15) rotatably connecting the first housing (e.g., 210 in FIGS. 1 to 15) and the second housing (e.g., 220 in FIGS. 1 to 15).

According to an embodiment of the disclosure, the flexible circuit board (e.g., 300 in FIGS. 1 to 15) may extend across the hinge (e.g., 270 in FIGS. 1 to 15) from the first housing (e.g., 210 in FIGS. 1 to 15) to the second housing (e.g., 220 in FIGS. 1 to 15).

According to an embodiment of the disclosure, the flexible circuit board (e.g., 300 in FIGS. 1 to 15) may include a bending portion (e.g., 303 in FIGS. 1 to 15) that extends in an at least partially curved form.

According to an embodiment of the disclosure, the flexible circuit board (e.g., 300 in FIGS. 1 to 15) may include an extension portion (e.g., 304 in FIGS. 1 to 15) that extends from the bending portion (e.g., 303 in FIGS. 1 to 15) and comes into contact with the sealer (e.g., 310 in FIGS. 1 to 15).

According to an embodiment of the disclosure, the electronic device (e.g., 101 in FIGS. 1 to 15) may include a housing (e.g., 201 in FIGS. 1 to 15) including a support member (e.g., 2010 in FIGS. 1 to 15).

According to an embodiment of the disclosure, the sealer (e.g., 310 in FIGS. 1 to 15) may press the flexible circuit board (e.g., 300 in FIGS. 1 to 15) toward the support member (e.g., 2010 in FIGS. 1 to 15).

According to an embodiment of the disclosure, the electronic device (e.g., 101 in FIGS. 1 to 15) may include a sealer (e.g., 410 in FIGS. 1 to 15) spaced apart from the support member (e.g., 2010 in FIGS. 1 to 15).

According to an embodiment of the disclosure, the electronic device (e.g., 101 in FIGS. 1 to 15) may include a flexible circuit board (e.g., 300 in FIGS. 1 to 15) disposed between the sealer (e.g., 410 in FIGS. 1 to 15) and a second support portion (e.g., 2011 in FIGS. 1 to 15) which is a portion of the support member.

According to an embodiment of the disclosure, the second support portion (e.g., 2011 in FIGS. 1 to 15) may be formed such that the thickness of a portion corresponding to the first portion (e.g., 305 in FIGS. 1 to 15) is smaller than that of a portion corresponding to the second portion (e.g., 306 in FIGS. 1 to 15).

According to an embodiment of the disclosure, the electronic device (e.g., 101 in FIGS. 1 to 15) may include a gasket (e.g., 320 in FIGS. 1 to 15) partially disposed between the flexible circuit board (e.g., 300 in FIGS. 1 to 15) and the support member (e.g., 2010 in FIGS. 1 to 15).

According to an embodiment of the disclosure, the sealer (e.g., 510 in FIGS. 1 to 15) may include a first sealing portion (e.g., 511 in FIGS. 1 to 15) disposed to correspond to the first portion (e.g., 305 in FIGS. 1 to 15) and having a first modulus.

According to an embodiment of the disclosure, the sealer (e.g., 510 in FIGS. 1 to 15) may include a second sealing portion (e.g., 512 in FIGS. 1 to 15) disposed to correspond to the second portion (e.g., 306 in FIGS. 1 to 15) and having a second modulus greater than the first modulus.

According to an embodiment of the disclosure, a foldable electronic device (e.g., 101 in FIGS. 1 to 15) may include a foldable housing (e.g., 201 in FIGS. 1 to 15) having a first housing (e.g., 210 in FIGS. 1 to 15), a second housing (e.g., 220 in FIGS. 1 to 15), and a hinge (e.g., 270 in FIGS. 1 to 15) configured to rotatably couple the first housing (e.g., 210 in FIGS. 1 to 15) and the second housing (e.g., 220 in FIGS. 1 to 15).

According to an embodiment of the disclosure, the foldable electronic device (e.g., 101 in FIGS. 1 to 15) may include a flexible circuit board (e.g., 300 in FIGS. 1 to 15) extending across the hinge housing in a first direction to be connected to first circuitry within the first housing (e.g., 210 in FIGS. 1 to 15) and second circuitry within the second housing (e.g., 220 in FIGS. 1 to 15). The flexible circuit board may include a first portion (e.g., 305 in FIGS. 1 to 15) having at least one signal line and a second portion (e.g., 306 in FIGS. 1 to 15) having at least one signal line.

According to an embodiment of the disclosure, the foldable electronic device (e.g., 101 in FIGS. 1 to 15) may include a sealer (e.g., 310 in FIGS. 1 to 15) configured to interfere with a portion of the flexible circuit board (e.g., 300 in FIGS. 1 to 15) and the first housing (e.g., 210 in FIGS. 1 to 15) and configured to block the flow of fluid into the interior of the first housing (e.g., 210 in FIGS. 1 to 15).

According to an embodiment of the disclosure, the first and second portions (e.g., 305 and 306 in FIGS. 1 to 15) of the flexible circuit board (e.g., 300 in FIGS. 1 to 15) may be disposed side by side in a second direction perpendicular to the first direction, and the first portion (e.g., 305 in FIGS. 1 to 15) may have a thickness greater than that of the second portion (e.g., 306 in FIGS. 1 to 15).

According to an embodiment of the disclosure, the sealer (e.g., 310 in FIGS. 1 to 15) may include a first sealing portion (e.g., 311 in FIGS. 1 to 15) that presses the first portion (e.g., 305 in FIGS. 1 to 15) of the flexible circuit board (e.g., 300 in FIGS. 1 to 15) and a second sealing portion (e.g., 312 in FIGS. 1 to 15) that presses the second portion (e.g., 306 in FIGS. 1 to 15) of the flexible circuit board (e.g., 300 in FIGS. 1 to 15), and the second sealing portion (e.g., 312 in FIGS. 1 to 15) may have a thickness greater than that of the first sealing portion (e.g., 311 in FIGS. 1 to 15).

In a first example, there is provided a foldable electronic device (e.g. 101) comprising: a foldable housing (e.g. 201) including a first housing (e.g. 210) and a second housing (e.g. 220); a hinge (e.g. 270) configured to rotatably couple the first housing (e.g. 210) and the second housing (e.g. 220); a flexible circuit board (e.g. 300) extending across the hinge in a first direction to connect first circuitry in the first housing (e.g. 210) and second circuitry in the second housing (e.g. 220), the flexible circuit board (e.g. 300) including a first portion (e.g. 305) including at least one signal line and a second portion (e.g. 306) including at least one signal line; a sealer (e.g. 310) engaged between the flexible circuit board (e.g. 300) and a support in the first housing (e.g. 210) and configured to block passage of water into an interior of the first housing (e.g. 210); wherein the first portion (e.g. 305) and the second portion (e.g. 306) of the flexible circuit board (e.g. 300) are disposed side by side in a second direction perpendicular with respect to the first direction, the first portion (e.g. 305) having a thickness greater than a thickness of the second portion (e.g. 306), and wherein the sealer (e.g. 310) has a first sealing portion (e.g. 311) to press the first portion (e.g. 305) of the flexible circuit board (e.g. 300) and a second sealing portion (e.g. 312) to press the second portion (e.g. 306) of the flexible circuit board (e.g. 300), the second sealing portion (e.g. 312) having a thickness greater than a thickness of the first sealing portion (e.g. 311).

In a second example, there is provided the electronic device of the first example, wherein the flexible circuit board (e.g. 300) comprises a plurality of layers (e.g. 3091a, 3091b, 3091c, 3091d) including a first layer (e.g. 3091a) and a second layer (e.g. 3091b), wherein at least a portion of the first layer (e.g. 3091a) is separable with respect to at least a portion of the second layer (3091b).

In a third example, there is provided the electronic device of the second example, wherein a number of sub-layers (e.g. 3051, 3052, 3053, 3054) included in the first layer (e.g. 3091a) of the first portion (e.g. 305) is greater than a number of sub-layers (e.g. 3061a, 3061b, 3061c) included in the first layer (e.g. 3091a) of the second portion (e.g. 306).

In a fourth example, there is provided the electronic device of the second or third examples, wherein a thickness of a first space (e.g. 3092a) formed between the first and the second layer (e.g. 3091a, 3091b) of the first portion (e.g. 305) is smaller than a thickness of a second space (e.g. 3092b) formed between the first and the second layer (e.g. 3091a, 3091b) of the second portion (e.g. 306).

In a fifth example, there is provided the electronic device of any one of the first to fourth examples, wherein a first thickness of the first portion (e.g.305) is greater than a second thickness of the second portion (e.g. 306), and wherein a third thickness of the first sealing portion (e.g. 311) is smaller than a fourth thickness of the second sealing portion (e.g. 312).

In a sixth example, there is provided the electronic device of any one of the first to fifth examples, wherein the flexible circuit board (e.g. 300) includes a third portion (e.g. 307) connecting the first portion (e.g. 305) and the second portion (e.g. 306), and wherein the sealer (e.g. 310) includes a corner portion (e.g. 313) connecting the first sealing portion (e.g. 311) and the second sealing portion (e.g. 312), and disposed to correspond to the third portion (e.g. 307).

In a seventh example, there is provided the electronic device of any one of the first to sixth examples, wherein the sealer (e.g. 310) includes: a first overlap portion (e.g. 315) contacting the first portion (e.g. 305) of the flexible circuit board (e.g. 300); and a second overlay portion (e.g. 316) contacting the second portion (e.g. 306) of the flexible circuit board (e.g. 300), and dislocated from the first overlap portion (e.g. 315).

In an eighth example, there is provided the electronic device of any one of the first to seventh examples, further comprising: a gasket (e.g. 320) partially disposed between the flexible circuit board (e.g. 300) and the sealer (e.g. 310).

In a ninth example, there is provided the electronic device of the eighth example, wherein the gasket (e.g. 320) comprises: a first gasket (e.g. 321) disposed between the flexible circuit board (e.g. 300) and the sealer (e.g. 310); and a second gasket (e.g. 322) disposed between the sealer (e.g. 310) and the housing (e.g. 201).

In a tenth example, there is provided the electronic device of the eighth or ninth examples, wherein the flexible circuit board (e.g. 300) includes a recess (e.g. 308) recessed in a direction away from the sealer (e.g. 310), and wherein at least a portion of the gasket (e.g. 320) is disposed between the recess (e.g. 308) and the sealer (e.g. 310).

In an eleventh example, there is provided the electronic device of any one of the first to tenth examples, wherein the housing (e.g. 201) includes a support (e.g. 2011) spaced apart from the sealer (e.g. 310), wherein the first and second portions (e.g. 305, 306) of the flexible circuit board (e.g. 300) are disposed between the support (e.g. 2011) and the sealer (e.g. 310).

In a twelfth example, there is provided the electronic device of any one of the first to eleventh examples, comprising: a printed circuit board (e.g. 216, 226) disposed in the housing (e.g. 201); and an antenna (e.g. 219, 229) spaced apart from the printed circuit board (e.g. 216, 226), wherein the flexible circuit board (e.g. 300) extends from the printed circuit board (e.g. 216, 226) toward the antenna (e.g. 219, 229), and the second portion (e.g. 306) of the flexible circuit board (e.g. 300) is formed in a position where the flexible circuit board (e.g. 300) is connected to the printed circuit board (e.g. 216, 226) or the antenna (e.g. 219, 229).

In a thirteenth example, there is provided the electronic device of any one of the first to twelfth examples, wherein the housing (e.g. 201) comprises: a first housing (e.g. 210); and a second housing (e.g. 220) rotatably disposed with respect to the first housing (e.g. 210), wherein the electronic device (e.g. 101) comprises a hinge (e.g. 270) connecting the first housing (e.g. 210) and the second housing (e.g. 220), wherein the flexible circuit board (e.g. 300) extends from the first housing (e.g. 210) toward the second housing (e.g. 220) to cross the hinge (e.g. 270), and wherein the second portion (e.g. 306) of the flexible circuit board (e.g. 300) is formed in a position where the flexible circuit board (e.g. 300) crosses the hinge (e.g. 270).

In a fourteenth example, there is provided the electronic device of any one of the first to thirteenth examples, wherein the flexible circuit board (e.g. 300) includes: a bending portion (e.g. 303), wherein at least a portion of the bending portion (e.g. 303) extends curvedly; and an extending portion (e.g. 304) extending from the bending portion (e.g. 303), and contacting to the sealer (e.g. 310).

In a fifteenth example, there is provided the electronic device of any one of the first to fourteenth examples, wherein the flexible circuit board (e.g. 300) includes: a first line (e.g. 3001); and a second line (e.g. 3002) formed integrally with the first line (e.g. 3001), and wherein the second portion (e.g. 306) is a part of the second line (3002).

In a sixteenth example, there is provided an electronic device (e.g. 101) comprising: a housing (e.g. 201); a deformable flexible circuit board (e.g. 300); a support member (e.g. 2010) disposed inside the housing (e.g. 201); and a sealer (e.g. 310) disposed between the flexible circuit board (e.g. 300) and a portion (e.g. 2011) of the support member, wherein the flexible circuit board (e.g. 300) comprises: a first portion (e.g. 305) having a first thickness and configured to transmit a first signal; and a second portion (e.g. 306) having a second thickness smaller than the first thickness and configured to transmit a second signal, and wherein the sealer (e.g. 310) comprises: a first sealing portion (e.g. 311) disposed at a position corresponding to the first portion (e.g. 305) and having a third thickness; and a second sealing portion (e.g. 312) disposed at a position corresponding to the second portion (e.g. 306) and having a fourth thickness greater than the third thickness.

In a seventeenth example, there is provided the electronic device of the sixteenth example, wherein the flexible circuit board (e.g. 300) comprises a third portion (e.g. 307) connecting the first portion (e.g. 305) and the second portion (e.g. 306), and wherein the sealer (e.g. 310) comprises a corner portion (e.g. 313) connecting the first sealing portion (e.g. 311) and the second sealing portion (e.g. 312), and disposed to correspond to the third portion (e.g. 307).

In an eighteenth example, there is provided the electronic device of the sixteenth or seventeenth examples, wherein the sealer (e.g. 310) comprises: a first overlap portion (e.g. 315) contacting the first portion (e.g. 305) of the flexible circuit board (e.g. 300); and a second overlay portion (e.g. 316) contacting the second portion (e.g. 306) of the flexible circuit board (e.g. 300), and dislocated from the first overlap portion (e.g. 315).

In a nineteenth example, there is provided the electronic device of any one of the sixteenth to eighteenth examples, further comprising: a gasket (e.g. 320) partially disposed between the flexible circuit board (e.g. 300) and the support member (e.g. 2010).

In a twentieth example, there is provided an electronic device (e.g. 101) comprising: a housing (e.g. 201); a deformable flexible circuit board (e.g. 300); a support member (e.g. 2010) disposed inside the housing (e.g. 201); and a sealer (e.g. 510) disposed between the flexible circuit board (e.g. 300) and a portion (e.g. 2011) of the support member, wherein the flexible circuit board (e.g. 300) comprises: a first portion (e.g. 305) having a first thickness; and a second portion (e.g. 306) having a second thickness smaller than the first thickness, wherein the sealer (e.g. 510) comprises: a first sealing portion (e.g. 511) disposed to correspond to the first portion (e.g. 305) and having a first modulus; and a second sealing portion (e.g. 512) disposed to correspond to the second portion (e.g. 306) and having a second modulus greater than the first modulus.

In a twenty-first example, there is provided an electronic device (e.g. 101) comprising: a housing (e.g. 201); a deformable flexible circuit board (e.g. 300); a support member (e.g. 2010) disposed inside the housing (e.g. 201); and a sealer (e.g. 310) disposed between the flexible circuit board (e.g. 300) and a portion (e.g. 2012) of the support member, wherein the flexible circuit board (e.g. 300) comprises: a first portion (e.g. 305) having a first thickness and configured to transmit a first signal; and a second portion (e.g. 306) configured to transmit a second signal, wherein the second portion (e.g. 306) has a second thickness smaller than the first thickness or is compressible to a second thickness smaller than the first thickness, and wherein the sealer (e.g. 310) comprises: a first sealing portion (e.g. 311) disposed at a position corresponding to the first portion (e.g. 305) and having a third thickness; and a second sealing portion (e.g. 312) disposed at a position corresponding to the second portion (e.g. 306) and having a fourth thickness greater than the third thickness.

In a twenty-second example, there is provided the electronic device of the twenty-first example, wherein the flexible circuit board (e.g. 300) comprises a plurality of layers (e.g. 3091a, 3091b, 3091c, 3091d) including a first layer (e.g. 3091a) and a second layer (e.g. 3091b), wherein at least a portion of the first layer (e.g. 3091a) is separable with respect to at least a portion of the second layer (e.g. 3091b) to form a space (e.g. 3029) between the portion of the first layer (e.g. 3091a) and the portion of the second layer (e.g. 3091b).

In a twenty-third example, there is provided the electronic device of the twenty-second example, wherein a number of sub-layers (e.g. 3051, 3052, 3053, 3054) included in the first layer (e.g. 3091a) of the first portion (e.g. 305) is greater than a number of sub-layers (e.g. 3061a, 3061b, 3061c) included in the first layer (e.g. 3091a) of the second portion (e.g. 306).

In a twenty-fourth example, there is provided the electronic device of the twenty-second or twenty-third examples, wherein a thickness of a first space (e.g. 3092a) formed between the first layer (e.g. 3091a) and the second layer (e.g. 3091b) of the first portion (e.g. 305) is smaller than a thickness of a second space (e.g. 3092b) formed between the first layer (e.g. 3091a) and the second layer (e.g. 3091b) of the second portion (e.g. 306).

In a twenty-fifth example, there is provided the electronic device of any one of the twenty-first to twenty-fourth examples, wherein the flexible circuit board (e.g. 300) includes a third portion (e.g. 307) connecting the first portion (e.g. 305) and the second portion (e.g. 306), and wherein the sealer (e.g. 310) includes a corner portion (e.g. 313) connecting the first sealing portion (e.g. 311) and the second sealing portion (e.g. 312), and disposed to correspond to the third portion (e.g. 307).

In a twenty-sixth example, there is provided the electronic device of any one of the twenty-first to twenty-fifth examples, wherein the first sealing portion (e.g. 311) includes a first surface (e.g. 311a) configured to contact the first portion (e.g. 305) of the flexible circuit board (e.g. 300) or a first overlap portion (e.g. 315) configured to align with the first portion (e.g. 305) of the flexible circuit board (e.g. 300); and wherein the second sealing portion (e.g. 312) includes: a second surface (e.g. 312a) configured to contact the second portion (e.g. 306) of the flexible circuit board (e.g. 300), wherein the second surface (e.g. 312a) is dislocated from the first surface (e.g. 311a), or a second overlap portion (e.g. 316) configured to align with the second portion (e.g. 306) of the flexible circuit board (e.g. 300), wherein the second overlap portion (e.g. 316) is dislocated from the first overlap portion (e.g. 315).

In a twenty-seventh example, there is provided the electronic device of any one of the twenty-first to twenty-sixth examples, further comprising a gasket (e.g. 320), the gasket comprising at least one of: a first gasket (e.g. 321) at least partially disposed between the flexible circuit board (e.g. 300) and the sealer (e.g. 310); and a second gasket (e.g. 322) at least partially disposed between the sealer (e.g. 310) and the housing (e.g. 201).

In a twenty-eighth example, there is provided the electronic device of the twenty-seventh example, wherein the flexible circuit board (e.g. 300) includes a recess (e.g. 308) recessed in a direction away from the sealer (e.g. 310), and wherein at least a portion of the gasket (e.g. 320) is disposed between the recess (e.g. 308) and the sealer (e.g. 310).

In a twenty-ninth example, there is provided the electronic device of any one of the twenty-first to twenty-eighth examples, comprising: a printed circuit board (e.g. 216, 226) disposed in the housing (e.g. 201); and an antenna (e.g. 219, 229) spaced apart from the printed circuit board (e.g. 216, 226), wherein the flexible circuit board (e.g. 300) extends from the printed circuit board (e.g. 216, 226) toward the antenna (e.g. 219, 229), and the second portion (e.g. 306) of the flexible circuit board (e.g. 300) is formed in a position where the flexible circuit board (e.g. 300) is connected to the printed circuit board (e.g. 216, 226) or the antenna (e.g. 219, 229).

In a thirtieth example, there is provided the electronic device of any one of the twenty-first to twenty-ninth examples, wherein the housing (e.g. 201) comprises: a first housing (e.g. 210); and a second housing (e.g. 220) rotatably disposed with respect to the first housing (e.g. 210), wherein the electronic device (e.g. 101) comprises a hinge (e.g. 270) connecting the first housing (e.g. 210) and the second housing (e.g. 220), wherein the flexible circuit board (e.g. 300) extends from the first housing (e.g. 210) in a first direction toward the second housing (e.g. 220) to cross the hinge (e.g. 270), and wherein the second portion (e.g. 306) of the flexible circuit board (e.g. 300) is formed in a position where the flexible circuit board (e.g. 300) crosses the hinge (e.g. 270).

In a thirty-first example, there is provided the electronic device of the thirtieth example, wherein the first portion (e.g. 305) and the second portion (e.g. 306) of the flexible circuit board (e.g. 300) are disposed side by side in a second direction perpendicular with respect to the first direction.

In a thirty-second example, there is provided the electronic device of any one of the twenty-first to thirty-first examples, wherein the first sealing portion (e.g. 311) is configured to press the first portion (e.g. 305) of the flexible circuit board (e.g. 300), and the second sealing portion (e.g. 312) is configured to press the second portion (e.g. 306) of the flexible circuit board (e.g. 300); and wherein the sealer is configured to block passage of water into an interior of the housing.

In a thirty-third example, there is provided the electronic device of any one of the twenty-first to thirty-second examples, wherein the flexible circuit board (e.g. 300) includes: a bending portion (e.g. 303), wherein at least a portion of the bending portion (e.g. 303) extends curvedly; and an extending portion (e.g. 304) extending from the bending portion (e.g. 303), and configured to contact the sealer (e.g. 310).

In a thirty-fourth example, there is provided an electronic device (e.g. 101) comprising: a housing (e.g. 201); a deformable flexible circuit board (e.g. 300); a support member (e.g. 2010) disposed inside the housing (e.g. 201); and a sealer (e.g. 510) disposed between the flexible circuit board (e.g. 300) and a portion (e.g. 2012) of the support member, wherein the flexible circuit board (e.g. 300) comprises: a first portion (e.g. 305) having a first thickness and configured to transmit a first signal; and a second portion (e.g. 306) configured to transmit a second signal, wherein the second portion (e.g. 306) has a second thickness smaller than the first thickness, wherein the sealer (e.g. 510) comprises: a first sealing portion (e.g. 511) disposed to correspond to the first portion (e.g. 305) and having a first elastic modulus; and a second sealing portion (e.g. 512) disposed to correspond to the second portion (e.g. 306) and having a second elastic modulus greater than the first modulus.

In a thirty-fifth example, there is provided an electronic device (e.g. 101) comprising: a housing (e.g. 201); a deformable flexible circuit board (e.g. 300); a support member (e.g. 2010) disposed inside the housing (e.g. 201), the support member comprising a first support portion (e.g. 2012) and a second support portion (e.g. 2011); and a sealer (e.g. 410) disposed between the flexible circuit board (e.g. 300) and the first portion (e.g. 2012) of the support member, wherein the flexible circuit board (e.g. 300) comprises: a first portion (e.g. 305) having a first thickness and configured to transmit a first signal; and a second portion (e.g. 306) configured to transmit a second signal, wherein the second portion (e.g. 306) has a second thickness smaller than the first thickness, and wherein the second support portion (e.g. 2011) comprises: a first area (e.g. 2011a) disposed at a position corresponding to the first portion (e.g. 305) and having a third thickness; and a second area (e.g. 2011b) disposed at a position corresponding to the second portion (e.g. 306) and having a fourth thickness greater than the third thickness.

In a thirty-sixth example, there is provided an electronic device (e.g. 101) comprising: a housing (e.g. 201); a deformable flexible circuit board (e.g. 300); a support member (e.g. 2010) disposed inside the housing (e.g. 201); and a sealer (e.g. 310) disposed between the flexible circuit board (e.g. 300) and a first portion (e.g. 2012) of the support member, wherein the flexible circuit board (e.g. 300) comprises: a first portion (e.g. 305) having a first thickness and configured to transmit a first signal; and a second portion (e.g. 306) configured to transmit a second signal, wherein the second portion (e.g. 306) has a second thickness smaller than the first thickness, and wherein at least one of the sealer (e.g. 310) or a second portion (e.g. 2011) of the support member (e.g. 2010) comprises: a first surface (e.g. 311a, 315, 2011a) configured to contact or align with the first portion (e.g. 305) of the flexible circuit board (e.g. 300); and a second surface (e.g. 312a, 316, 2011b) configured to contact or align with the second portion (e.g. 306) of the flexible circuit board (e.g. 300), wherein the second surface (e.g. 312a, 316, 2011b) is dislocated from the first surface (312a, 316, 2011b).

In a thirty-seventh example, there is provided the electronic device of any one of the thirty-fourth to thirty-sixth examples, combined with the features of any one of the twenty-first to thirty-third examples.

In a thirty-eighth example, there is provided the electronic device of any one of the twenty-first to thirty-seventh examples, wherein a type of the first signal is different to a type of the second signal.

In a thirty-ninth example, there is provided the electronic device of the thirty-eighth example, wherein the first signal includes at least one of: a signal transmitted from or to a display (e.g. 230) of the electronic device, a signal transmitted from or to a battery (e.g. 215, 225) of the electronic device, a signal transmitted from or to an external storage medium connected to the electronic device, and a signal to be transmitted using at least one logic line that processes data; and wherein the second signal includes at least one of: a radio frequency (RF) signal, a signal transmitted from an exterior of the electronic device, a communication signal outside the electronic device, a signal to be transmitted using at least one signal line that transmits signals; and a signal to be transmitted to or from an antenna module (219, 229) of the electronic device.

Although specific embodiments have been described above in the detailed description of the disclosure, it will be apparent to those skilled in the art that various changes and modifications may be made without departing from the scope of the disclosure.

Although an embodiment of the disclosure has been illustrated and described, it should be appreciated that the embodiment does not limit the disclosure, but is provided for the sake of illustration. It will be apparent to those skilled in the art that various changes may be made to the form and details of the disclosure without departing from the overall perspective of the disclosure including the appended claims and equivalents thereof.

## Claims

1. A foldable electronic device (101) comprising:
a foldable housing (201) including a first housing (210) and a second housing (220);
a hinge (270) configured to rotatably couple the first housing (210) and the second housing (220);
a flexible circuit board (300) extending across the hinge in a first direction to connect first circuitry in the first housing (210) and second circuitry in the second housing (220), the flexible circuit board (300) including a first portion (305) including at least one signal line and a second portion (306) including at least one signal line;
a sealer (310) engaged between the flexible circuit board (300) and a support in the first housing (210) and configured to block passage of water into an interior of the first housing (210);
wherein the first portion (305) and the second portion (306) of the flexible circuit board (300) are disposed side by side in a second direction perpendicular with respect to the first direction, wherein the second portion (306) has a second thickness smaller than a first thickness of the first portion (305) or is configured to be compressible to a second thickness smaller than the first thickness, and
wherein the sealer (310) has a first sealing portion (311) to press the first portion (305) of the flexible circuit board (300) and a second sealing portion (312) to press the second portion (306) of the flexible circuit board (300), the second sealing portion (312) having a thickness greater than a thickness of the first sealing portion (311).

2. The electronic device of claim 1, wherein the flexible circuit board (300) comprises a plurality of layers (3091a, 3091b, 3091c, 3091d) including a first layer (3091a) and a second layer (3091b),
wherein at least a portion of the first layer (3091a) is separable with respect to at least a portion of the second layer (3091b).

3. The electronic device of claim 2, wherein a number of sub-layers (3051, 3052, 3053, 3054) included in the first layer (3091a) of the first portion (305) is greater than a number of sub-layers (3061a, 3061b, 3061c) included in the first layer (3091a) of the second portion (306).

4. The electronic device of claim 2 or 3,
wherein a thickness of a first space (3092a) formed between the first layer (3091a) and the second layer (3091b) of the first portion (305) is smaller than a thickness of a second space (3092b) formed between the first layer (3091a) and the second layer (3091b) of the second portion (306).

5. The electronic device of any one of claims 1 to 4,
wherein a third thickness of the first sealing portion (311) is smaller than a fourth thickness of the second sealing portion (312).

6. The electronic device of any one of claims 1 to 5,
wherein the flexible circuit board (300) includes a third portion (307) connecting the first portion (305) and the second portion (306), and
wherein the sealer (310) includes a corner portion (313) connecting the first sealing portion (311) and the second sealing portion (312), and disposed to correspond to the third portion (307).

7. The electronic device of any one of claims 1 to 6,
wherein the first sealing portion (311) includes
a first surface (311a) configured to contact the first portion (305) of the flexible circuit board (300) or a first overlap portion (315) configured to align with the first portion (305) of the flexible circuit board (300); and
wherein the second sealing portion (312) includes:
a second surface (312a) configured to contact the second portion (306) of the flexible circuit board (300), wherein the second surface (312a) is dislocated from the first surface (311a), or
a second overlap portion (316) configured to align with the second portion (306) of the flexible circuit board (300), wherein the second overlap portion (316) is dislocated from the first overlap portion (315).

8. The electronic device of any one of claims 1 to 7, further comprising a gasket (320), the gasket comprising at least one of:
a first gasket (321) at least partially disposed between the flexible circuit board (300) and the sealer (310); and
a second gasket (322) at least partially disposed between the sealer (310) and the housing (201).

9. The electronic device of claim 8,
wherein the flexible circuit board (300) includes a recess (308) recessed in a direction away from the sealer (310), and
wherein at least a portion of the gasket (320) is disposed between the recess (308) and the sealer (310).

10. The electronic device of any one of claims 1 to 9, comprising:
a printed circuit board (216, 226) disposed in the housing (201); and
an antenna (219, 229) spaced apart from the printed circuit board (216, 226),
wherein the flexible circuit board (300) extends from the printed circuit board (216, 226) toward the antenna (219, 229), and the second portion (306) of the flexible circuit board (300) is formed in a position where the flexible circuit board (300) is connected to the printed circuit board (216, 226) or the antenna (219, 229).

11. The electronic device of any one of claims 1 to 10,
wherein the housing (201) comprises:
a first housing (210); and
a second housing (220) rotatably disposed with respect to the first housing (210),
wherein the electronic device (101) comprises a hinge (270) connecting the first housing (210) and the second housing (220),
wherein the flexible circuit board (300) extends from the first housing (210) in a first direction toward the second housing (220) to cross the hinge (270), and
wherein the second portion (306) of the flexible circuit board (300) is formed in a position where the flexible circuit board (300) crosses the hinge (270).

12. The electronic device of any one of claims 1 to 11,
wherein the flexible circuit board (300) includes:
a bending portion (303), wherein at least a portion of the bending portion (303) extends curvedly; and
an extending portion (304) extending from the bending portion (303), and configured to contact the sealer (310).

13. The electronic device of any one of claims 1 to 12,
wherein the flexible circuit board (300) includes:
a first line (3001); and
a second line (3002) formed integrally with the first line (3001), and
wherein the second portion (306) is a part of the second line (3002).

14. An electronic device (101) comprising:
a housing (201);
a deformable flexible circuit board (300);
a support member (2010) disposed inside the housing (201); and
a sealer (510) disposed between the flexible circuit board (300) and a portion (2012) of the support member,
wherein the flexible circuit board (300) comprises:
a first portion (305) having a first thickness and configured to transmit a first signal; and
a second portion (306) configured to transmit a second signal, wherein the second portion (306) has a second thickness smaller than the first thickness, wherein the sealer (510) comprises:
a first sealing portion (511) disposed to correspond to the first portion (305) and having a first elastic modulus; and
a second sealing portion (512) disposed to correspond to the second portion (306) and having a second elastic modulus greater than the first elastic modulus.

15. An electronic device (101) comprising:
a housing (201);
a deformable flexible circuit board (300);
a support member (2010) disposed inside the housing (201), the support member comprising a first support portion (2012) and a second support portion (2011); and
a sealer (410) disposed between the flexible circuit board (300) and the first portion (2012) of the support member,
wherein the flexible circuit board (300) comprises:
a first portion (305) having a first thickness and configured to transmit a first signal; and
a second portion (306) configured to transmit a second signal, wherein the second portion (306) has a second thickness smaller than the first thickness, and wherein the second support portion (2011) comprises:
a first area (2011a) disposed at a position corresponding to the first portion (305) and having a third thickness; and
a second area (2011b) disposed at a position corresponding to the second portion (306) and having a fourth thickness greater than the third thickness.
